# EUROPÄISCHE PATENTSCHRIFT

(11) **EP 4 433 662 B1**
(45) Veröffentlichungstag und Bekanntmachung des Hinweises auf die Patenterteilung: **12.11.2025**
(21) Anmeldenummer: 22813323.7
(22) Anmeldetag: 15.11.2022
(51) Int. Cl.: E03D 5/00, A47K 11/02, E03D 5/014, E03D 11/11

(54) **VERFAHREN UND EINRICHTUNG ZUR ABSCHEIDUNG VON FESTSTOFFEN HINTER EINEM SIPHON EINES WASSERKLOSETTS**
METHOD AND DEVICE FOR REMOVING SOLIDS DOWNSTREAM OF A SIPHON OF A TOILET
PROCÉDÉ ET DISPOSITIF DE SÉPARATION DE MATIÈRES SOLIDES DERRIÈRE UN SIPHON D'UN TOILETTE

(30) Priorität: 15.11.2021 CH 0705542021
(43) Veröffentlichungstag der Anmeldung: 25.09.2024
(73) Patentinhaber: LEFT AG, 6300 Zug (CH)
(72) Erfinder: Koller, Markus, 5620 Bremgarten (CH)
(74) Vertreter: Felber, Josef
(86) Internationale Anmeldenummer: PCT/EP2022/081879
(87) Internationale Veröffentlichungsnummer: WO 2023/084100

(56) Entgegenhaltungen:
- KR-A- 20170 139 960
- US-A1- 2008 047 054
- US-A1- 2009 255 045
- US-A1- 2010 024 116

## Beschreibung

Die öffentliche Abwasserinfrastruktur ist anspruchsvoll und wird in vielen Ländern ständig ausgebaut und sie muss auch ständig unterhalten und repariert werden. In den zivilisierten Ländern hat sich das Wasser Closett, kurz WC, durchgesetzt. Danach wird die Notdurft in eine Auffang-Schüssel verrichtet und hernach mitsamt dem allenfalls verwendeten WC-Papier mit einer Charge Spülwasser in ein Kanalisationssystem gespült. Die Kanalisationsrohre müssen alle mit einer Mindestneigung verlegt sein, um hinreichend Gefälle für den Durchsatz zu gewährleisten und sie münden in immer grössere Rohre, bis sie schliesslich in grosse unterirdische Abwasserkanäle münden, welche das Abwasser den Kläranlagen zuführen. Dort muss das verunreinigte Wasser aufwändig gereinigt werden, bevor es in die natürlichen Gewässer entlassen werden kann.

Die Geschichte der Entsorgung häuslicher Abfälle aus menschlichen Siedlungen ist sehr alt. Schon vor über 2000 Jahren entstand in Rom ein Vorläufer der heutigen Kanalisation. Dieses System entwässerte Schmutz- und Regenwasser aus der Stadt. In der Zeit während des Mittelalters wurde die frühere Technologie vernachlässigt und die Entsorgung der Fäkalien erfolgte überwiegend durch Wegschwemmen, teil über die Strassen. Es kam in der Folge zur unkontrollierbaren Ausbreitung von Krankheitserregern. Viele Menschen wurden Opfer dieser vernachlässigten Hygiene.

Infolge der industriellen Revolution des 19. Jahrhunderts in Europa und Nordamerika wurde die Körperhygiene immer mehr ein zentrales Anliegen, weil die Menschen häufig auf Grund einer Erkrankung nicht zur Arbeit erscheinen konnten. Man baute wieder unterirdische Kanalisationen, um die Fäkalien in die Flüsse oder Seen zu leiten. Durch die starke Belastung des Wassers und das Wachsen der Siedlungen wurde mit der Zeit die Aufnahmekapazität und Selbstreinigungskraft der Gewässer überschritten. Als Folge des Schmutzstoffeintrages in die Gewässer ergaben sich für die Menschen wiederum erhebliche Probleme bei der Trinkwassergewinnung.

Nach und nach kam auf Grund der wirtschaftlichen Entwicklung auch die Behandlung der Fäkalien in neu erstellten Kläranlagen zum Tragen. Heute ist das System aus zentraler Wasserversorgung, Schwemmkanalisation und zentralen Kläranlagen «am Ende des Rohrs» wichtiger Bestandteil einer integralen Ver- und Entsorgung von Siedlungsgebieten.

Als Alternative zur zentralen Abwasserbehandlung wird im ländlichen Raum bereits seit langem die dezentrale Abwasserentsorgung praktiziert. Unter dezentraler Abwasserreinigung versteht man die Behandlung des häuslichen Abwassers in kleinen und kleinsten Kläranlagen als Gemeinschaftseinrichtung für Ortsteile oder als Einzellösung. Regenwasser wird separat gespeichert, versickert oder wird abgeleitet.

Aus den oben dargelegten Sachverhalten heraus wird deutlich, dass es notwendig ist, eine den modernen Erkenntnissen und technischen Möglichkeiten entsprechende alternative Abwasser- und überhaupt Wasserstrategie zu entwickeln. Ansätze für eine zukunftsfähige on-site Abwasserpolitik reichen von der Regenwassernutzung über die Nutzung von gereinigtem Abwasser bis zur Rückgewinnung und Rückführung von Nährstoffen in die Landwirtschaft.

Im Jahr 2011 wurde weltweit ein Wettbewerb der Melanie & Bill Gates Foundation ausgeschrieben, um eine ökologische, umweltfreundliche und wirtschaftliche einfache Toilettenanlage zu entwickeln. Dabei waren die Ergebnisse eher dürftig. Für eine breite Bevölkerung von offensichtlich 2.5 Milliarden Menschen, welche über keinen direkten Zugang zu einer Toilette verfügen, waren die vorgeschlagenen Lösungsansätze ausserdem wenig geeignet.

Ein neuer Ansatz geht davon aus, dass die Probleme möglichst am Ursprungsort angegangen werden sollten. Dies würde aber dazu führen, dass ein Benutzer oder Betreiber einer entsprechenden WC Anlage jeweils eine Mehrleistung für die Entsorgung der Abgänge erbringen müsste. Das kann und soll nicht sein, und deshalb wurden diese Ideen aus den vorgeschlagenen Möglichkeiten einer ökologischen Entsorgung wieder fallen gelassen.

Im Mischsystem wird das häusliche Schmutzwasser gemeinsam mit dem Regenwasser über eine Mischkanalisation abgeleitet und in einer Kläranlage behandelt. Die Reinigung des Abwassergemisches erfolgt mit hohem technischem Aufwand. Eine Wiederverwendung der im Abwasser enthaltenen Inhaltstoffe ist nahezu ausgeschlossen oder nur mit hohem technischem Aufwand praktizierbar. Das gereinigte Abwasser wird in einen Vorfluter eingeleitet und geht so dem innerstädtischen Grundwasserhaushalt verloren. Wirkliche "Patentlösungen" für die (Ab-)Wasserwirtschaft gibt es nicht. Die Kunst besteht in der Auswahl von Technologien, die den klimatischen, hydrologischen, aber auch den sozialen, kulturellen und wirtschaftlichen Bedingungen vor Ort angepasst sind.

Die modernen WCs bieten zwar den Vorteil, dass die Notdurft in den Gebäuden komfortabel und hygienisch verrichtet werden kann, mit einer minimalen Geruchsbeeinträchtigung. Der Preis dafür ist allerdings ein erheblicher Wasserbedarf. Für jede Spülung werden in vielen Ländern etwa 9 Liter Trinkwasser eingesetzt, mit verbesserten Spülungen noch 6 Liter. Das Wasser wird bloss zu Transportzwecken eingesetzt und muss hernach wieder aufwändig gereinigt werden, was entsprechend aufwändig und teuer ist.

Am Beispiel der Schweiz soll der diesbezügliche Aufwand nachfolgend anhand einiger Zahlen aufgezeigt werden. Gemäss einer Studie des EAWAG, des Wasserforschungsinstituts des ETH-Bereichs von November 2006 gab es schon damals 759 Kläranlagen mit jeweils mehr als 500 angeschlossenen Einwohnern und 47'400 km Kanalisationsleitungen in der Schweiz. Zusätzlich kommen mehr als 3'383 Kleinkläranlagen, etwa 42'000 km Leitungen von Liegenschaftsentwässerungen und rund 1'700'000 Hausanschlüsse dazu. Der gesamte Wiederbeschaffungswert dieser öffentlichen Bauten betrug damals schon hochgerechnet ca. 65.3 Milliarden CHF und derjenige der Liegenschaftsentwässerung ca. 16.8 Milliarden CHF. Zusammen mit dem geschätzten Wert der Sanitärinstallationen von 17.4 Milliarden CHF ergab sich ein Gesamtwert für die gesamte schweizerische Siedlungsentwässerung von knapp 100 Milliarden CHF. Davon werden 34% privat verwaltet und 66% befinden sich in öffentlicher Hand.

Gemäss den Angaben der Gemeinden und der übergeordneten Kantone, die in der Schweiz mehrere Gemeinden umfassen, betrugen schon damals die hochgerechneten Jahreskosten für die Abwasserentsorgung 1.69 Milliarden CHF. Davon wurden 48% von den Kläranalgen und 52% von der Kanalisation verursacht. Die jährlichen Betriebskosten der gesamten öffentlichen Infrastruktur waren dabei rund 727 Million CHF, davon 440 Millionen (61%) für den Betrieb der Kläranlagen. Die gesamten Zinskosten wurden mit 92 Millionen CHF angegeben und betrugen damit 0.145 % des Wiederbeschaffungswertes.

Für mehr als 500 Gemeinden, welche rund 25% der schweizerischen Bevölkerung repräsentieren, konnten die Kosten der Kanalisation detaillierter untersucht werden. Der hochgerechnete Wert der öffentlichen Kanalisationen in der Schweiz betrug 55.2 Milliarden CHF oder rund 7'600 CHF pro Einwohner. Obwohl mit zunehmender Siedlungsdichte die spezifischen Wiederbeschaffungswerte der Kanalisation pro Meter Kanalisation deutlich ansteigen, war der Wiederbeschaffungswert pro Einwohner innerhalb der verschiedenen Gemeindetypen nur noch geringfügig unterschiedlich. Der jährliche Investitionsbedarf für die Sanierung der Kanalisationen betrug schon 2006 gemäss den vorliegenden Daten rund 0.8% des Wiederbeschaffungswertes der Anlagen. Der Zustand der Anlagen und die zu erwartende Lebenserwartung sind Gründe dafür, dass der Sanierungsbedarf für die Kanalisationen in den letzten Jahren bis heute deutlich anstieg.

Neben allen Vorteilen der modernen Siedlungsentwässerung weist das Konzept aus Kanalisation und zentraler Abwasserreinigung auch Nachteile auf, und diese lassen Zweifel darüber aufkommen, ob diese etablierte Lösung auf Dauer der Weisheit letzter Schluss sei. Folgende Aspekte können hierfür angeführt werden:

Die Schwemmkanalisation reicht für ein hohes Niveau im Gewässerschutz nicht aus. Trotz der grossen behandelten Wassermassen und der hohen Verdünnungen stellen auch die aufwändig gereinigten Abwässer oftmals noch eine starke Belastung für die natürlichen Gewässer dar.

Betrieb und Unterhalt des bestehenden Kanalisationssystems und der Kläranlagen sind kostenintensiv und der Bau erfordert hohe Investitionen.

Ansätze zu einem ökologischen Stoffstrom-Management durch stoffliche Trennung und Recycling von Wertstoffen sind im bestehenden System nur sehr beschränkt möglich. In KR 2017 0139960 A wird eine Vorrichtung zur Entsorgung von Fäkalien vorgestellt. Sie umfasst einen oben offenen zylindrischen Behälter 100 mit oben einer aufklappbaren Klosett-Brille 130. In das Innern des Behälters 100 kann eine Vinyl-Rolle 10 mit vertikal verlaufender Rollenachse eingesetzt werden, die dazu über einen Halter 120 in Form eines Rohrabschnittes gestülpt wird, wobei dieser Halter 120 auf einem horizontalen Zwischenboden 140 mit zentralem Loch steht. Unterhalb des Lochs sind diametral zueinander versetzt zwei antreibbare Rollen 140, 200 vorhanden, um einen ab der Vinyl-Rolle 10 abgehenden Schlauch nach unten zu ziehen. Unterhalb der Rollen 140, 200 sind zwei ebenfalls diametral zueinander angeordnete Schweissbalken 300 angeordnet. Wenn diese horizontal zusammenfahren, drücken sie den Schlauch zwischen sich flach und verschweissen die beiden Vinyl-Seiten durch elektrische Hitzeeinwirkung und dichten somit den Schlauch ab, sodass ein Sack gebildet wird. Urin und Exkremente sowie auch WC-Papier fallen daher in diesen Sack. Anschliessend wird ein nächster Abschnitt Vinylschlauch ab der Rolle nach unten gezogen und es wird durch Verschweissung ein neuer Sack gebildet und gleichzeitig wird der gefüllt hermetisch verschlossen. Der Behälter ist jedoch kein Wasser-Klosett und die verschweissten Beutel sind nicht geeignet, um über die Kanalisation entsorgt zu werden. Aus US 2009/255045 A1 ist eine tragbare Trocken-Klosettvorrichtung bekannt, mit der Ausscheidungen in einen flexiblen, beutelartigen Behälter verpackt werden und diese Packung hermetisch zu versiegelt wird, wobei dann bis zu sechs solcher Packungen unter der Klosettschüssel in einem flachen, kastenförmigen Behälter für die spätere Entsorgung gesammelt werden. Aus US 2010/024116 A1 isteine Toilettenspülung ohne Wasser bekannt. Sie besteht aus einer Vorrichtung mit einer Spülpumpe für die oben gelagerten Spülflüssigkeit, einem Sammelbehälter für Spülflüssigkeit, einem Sammelbehälter für Fäkalien und einer automatischen Vorrichtung zur Zugabe von Deodorantflüssigkeit. Eine Dispergier- und Zentrifugiervorrichtung besteht aus einer Dispergierwanne und einem Zentrifugierflügelrad, die auf derselben Drehwelle montiert sind, und einem Motor, der in der Senke der Klosettwanne montiert ist und zum Antrieb der Drehwelle dient. Die obere Spülflüssigkeitspumpe ist an der Innen- oder Außenseite des Spülflüssigkeitsbehälters angebracht, so dass die obere Spülflüssigkeit leicht abgepumpt werden kann.Die obere Spülflüssigkeitspumpe ist über eine Rohrleitung mit der Vorderseite des Klosettbeckens verbunden. Die Vorrichtung zeichnet sich dadurch aus, dass sie auch ein elektrisch gesteuertes Vier-Wege-Ventil enthält, dessen einer Ausgang mit dem Ausgang der seitlichen Senke auf der Rückseite der Klosett schüssel zum Sammeln der Fäkalien verbunden ist. Die drei Ausgänge sind durch ein Fäkalienverteilungsrohr, ein Fäkaliensammelrohr und ein Urinsammelrohr mit dem zentralen Teil der Toilettenschüssel, dem Fäkaliensammelkasten und dem Spülflüssigkeitssammelkasten verbunden. Das nächstliegende Dokument ist jedoch US 2008/047054 A1**.** Es zeigt ein Verfahren zur Abscheidung der Feststoffe aus einem Wasser-Klosett 100. Toilettensystem mit einer Schüssel, deren Innenraum durch eine Trennwand in einen vorderen und einen hinteren Führungsweg unterteilt ist, wobei die Trennwand einen Kopfabschnitt aufweist, der eine vordere und eine hintere Schräge definiert, und der vordere und der hintere Führungsweg mit einem vorderen bzw. einem hinteren Abwasserrohr verbunden sind, wobei ein Vakuumsauger an einem oberen Ende mit einem unteren Ende des hinteren Abwasserrohrs verbunden ist, und ein Abfallsammelbeutel mit einem unteren Ende des Vakuumsaugers verbunden ist, wodurch ausgeschiedener Urin auf die vordere Schräge des Teilers fällt, um durch den vorderen Führungsweg in das vordere Abfallrohr zu fließen und behandelt und entsorgt zu werden, und ausgeschiedener Stuhl auf die hintere Schräge des Teilers fällt und von dem Vakuumsauger angesaugt wird, um durch den hinteren Führungsweg und das hintere Abfallrohr in den Abfallsammelbeutel zu gelangen. Der schliesslich mit Kot gefüllte Abfallsammelsack wird aus dem Vakuumsauger entfernt und einer sofortigen Gefrierbehandlung unterzogen und zur späteren Verbrennung oder Verwendung als Düngemittel oder Brennstoff gelagert, um die Anforderungen des Umweltschutzes zu erfüllen. Keine dieser Lösung vermag aber die festen Bestandteile wie Exkremente und Klosettpapier in solchen Packungen effizient und gerichsdicht bereitzustellen und abzusondern, so dass dieselben durch die Kanalisation wegschwemmbar sind.

Vor diesem Hintergrund setzt sich diese Erfindung zum Ziel, eine Verbesserung herbeizuführen, indem die festen Exkremente und sonstige feste Stoffe wie WC-Papier vom Abwasserstrom getrennt und gesondert behandelt werden, um das ganze Kanalisationssystem zu entlasten und nur noch das Spülwasser über die Kanalisation zu entsorgen, oder gegebenenfalls auch noch den Urin.

Die Herausforderung ist es dabei, ein Verfahren und eine Einrichtung zu schaffen, mit welchen folgende Anforderungen erfüllt werden sollen:
1. Das Verfahren und die Einrichtung sollen hierzu die festen Exkremente sowie WC-Papier zuverlässig vom Abwasserstrom abscheiden und gesondert behandeln, um das Abwasser vom direkten Mitführen dieser Stoffe zu entlasten.
2. Die Einrichtung soll so kompakt gestaltet sein, dass sie in die Spülkasten-Bucht hinter einem modernen WC einbaubar ist.
3. Die Einrichtung soll möglichst einfach konstruiert sein und dauerhaft zuverlässig funktionieren, geräuscharm (max. 47dBA) und vor allem geruchsfrei.
4. Die Einrichtung soll möglichst einfach zu warten und zu bedienen sein.

Die Lösung dieser Aufgaben besteht in einem Verfahren zur Abscheidung der Feststoffe aus einem Wasser-Klosett nach dessen Siphon, das sich dadurch auszeichnet, dass die Feststoffe zusammen mit einem Luftanteil in vereinzelte Beutel eines endlos zugeführten Schlauches verpackt und die schwimmfähigen Beutel hermetisch verschweisst einzeln in die Kanalisation entlassen werden.

Desweiteren erfolgt die Lösung der Aufgabe durch eine Einrichtung zur Abscheidung der Feststoffe mit einem Wasser-Klosett mit einer Schüssel nach Anspruch 6.

Diese Einrichtung bzw. WC Anlage kann beispielsweise auch mit dem WC Trennsystem TOTO der Toijs Toki Co. Ltd. in Japan, oder mit dem WC "Urin Trap" der Firma Keramik Laufen AG, Wahlenstrasse 46, CH-4242 Laufen kombiniert werden, wodurch der Urin separat aufgefangen und entsorgt werden kann. Im Grundsatz aber werden nach der vorliegenden Einrichtung die flüssigen und festen Anteile der weggespülten Notdurft getrennt. Die Feststoffe werden soweit verarbeitet und verpackt, dass ein Transport in Form eines kissenförmigen Beutels ermöglicht wird, und diese Beutel werden entweder via Kanalisation weiterbefördert und in der Kläranlage unversehrt geborgen und entsorgt, ohne das Kanalisationswasser mit Fäkalien zu belasten, oder aber sie werden ausserhalb des Gebäudes in einem Sammelbehälter konzentriert und von dort periodisch entsorgt.

Die Einrichtung wird anhand der Zeichnungen vorgestellt und anhand derselben wird ihre Konstruktion genauer beschrieben und ihre Funktion für das Verfahren zur Abscheidung der Feststoffe wird erklärt. Man könnte die Einrichtung aufgrund ihrer Funktion treffend als LEFT-Einrichtung bezeichnen, mit LEFT = Lokale Entsorgung von Festen Toilettenabfällen.
Es zeigt:
- Figur 1:: Ein WC in einem Längsschnitt für die Trennung von Urin und festen Exkrementen;
- Figur 2:: Einen Standard-Einbaurahmen mit Spülkasten und den Anschlüssen für die Montage eines Wand-WCs nach konventioneller Bauart;
- Figur 3:: Ein Schema eines Hauses mit seiner Entwässerung unter Abtrennung des Urins und Kapselung der festen Exkremente;
- Figur 4:: Eine Einbau-Einheit mit Rahmen für einen Wandeinbau der ganzen Einrichtung, einzubauen hinter einem Wand-WC, mit darin allen Bestandteilen für den Betrieb des WCs mit Feststoff-Abscheidung und Beutelverpackung der Feststoffe von schräg vorne gesehen dargestellt;
- Figur 5:: Den unteren Bereich der Einbau-Einheit von hinten gesehen, gesondert dargestellt;
- Figur 6:: Eine schematische Darstellung aller Komponenten der erfindungsgemässen Einrichtung zum Abscheiden und Beutelverpacken der festen Exkremente;
- Figur 7:: Eine alternative Hebeeinrichtung für das Hochfördern der Feststoffe aus Feststoff-Abscheidetank in der Position zum Empfangen der Feststoffe aus dem Feststoff-Abscheidetank in deren Fangkorb;
- Figur 8:: Die Hebeeinrichtung nach Figur 7 beim Hochfördern des Fangkorbes;
- Figur 9:: Die Hebeeinrichtung nach Figur 7 mit aufgeklapptem Boden des Fangkorbes und dessen Entleerung in die Portioniervorrichtung;
- Figur 10:: Die Hebeeinrichtung nach Figur 7 nach dem Hochfördern des Fangkorbes und dessen Kippen in eine Ausleer-Position;
- Figur 11:: Die Portioniervorrichtung für das portionierte Fallenlassen von Feststoff-Portionen in die Beutel-Verpackungseinheit in einer Explosionsdarstellung längs der zentralen Drehachse von schräg oben gesehen;
- Figur 12:: Die Portioniervorrichtung nach Figur 11 von schräg unten gesehen dargestellt;
- Figur 13:: Die zusammengesetzte Portioniervorrichtung von schräg oben gesehen;
- Figur 14:: Die zusammengesetzte Portioniervorrichtung von schräg unten gesehen;
- Figur 15:: Die Schlauchbeutel-Verpackungseinheit im Ausgangszustand;
- Figur 16:: Die Schlauchbeutel-Verpackungseinheit nach Hochziehen eines Schlauchabschnitts zur Bildung eines einzelnen Schlauchbeutels;
- Figur 17:: Die Schlauchbeutel-Verpackungseinheit vor dem Quer-Verschweissen des hochgezogenen Schlauchabschnitts an seinem unteren Ende, zur Bildung eines oben offenen einzelnen Schlauchbeutels;
- Figur 18:: Die Schlauchbeutel-Verpackungseinheit nach dem Öffnen der oberen Mündung des mit Querschweissung unten verschlossenen Beutels;
- Figur 19:: Die Schlauchbeutel-Verpackungseinheit beim Abtrennen des oben offen gehaltenen Beutels vom nachfolgenden Endlos-Schlauch;
- Figur 20:: Die Schlauchbeutel-Verpackungseinheit mit dem offen gehaltenen Beutel und der weggezogenen Abschneide-Vorrichtung und einer unter den Beutel geschobenen Stützplatte, beim Befüllen mit Feststoffen;
- Figur 21:: Die Schlauchbeutel-Verpackungseinheit mit dem gefüllten noch offen gehaltenen, auf der Stützplatte ruhenden Beutel nach Einführen eines Luftrohrs;
- Figur 22:: Die Schlauchbeutel-Verpackungseinheit beim Zusammenfahren der oberen Beutelmündung des Beutels;
- Figur 23:: Die Schlauchbeutel-Verpackungseinheit beim Verschweissen der geschlossenen oberen Beutelmündung;
- Figur 24:: Die Ausgestaltung der Vakuumleisten mit ihren Schweissbalken zur Verschweissung rund um die Luftrohrmündung;
- Figur 25:: Die verschweisste Schlauchbeutel-Verpackungseinheit, an den oberen Vakuumleisten mit Schweissbalken hängend, nach dem Wegfahren der Stützplatte, und bereit für die Entlassung in die Kanalisation;
- Figur 26:: Ein unter den Beutel geschobener Gleitkännel bzw. eine Gleitrinne zum Ableiten des hermetisch geschlossenen Beutels in das Ableitungsrohr mit Syphon als Geruchsverschluss für die Kanalisation, bei auseinander gefahrenen Vakuumleisten;
- Figur 27:: Eine alternative Schlauchbeutel-Verpackungseinheit für die Erzeugung von annähernd runden Beuteln, mit den für das bogenförmige Verschweissen des hochgezogenen Schlauchabschnitts eingesetzten unteren, bogenförmigen Schweissbalken nach deren Rückzug, nach Bildung eines oben offenen und unten bogenförmigen einzelnen Schlauchbeutels für dessen Befüllung;
- Figur 28:: Die Schlauchbeutel-Verpackungseinheit nach Figur 27, nach dem Auseinanderfahren der unteren bogenförmigen Schweissbalken, mit dem nun unten dicht verschlossenen oben an den Vakuumleisten hängenden Beutel;
- Figur 29:: Die Schlauchbeutel-Verpackungseinheit nach den Figuren23 und 24, nach dem Befüllen und jetzt beim Zusammenfahren der oberen Vakuumleisten und Umschliessen des Luftrohrs, sowie beim Zusammenfahren der oberen bogenförmigen Schweissbalken;
- Figur 30:: Die Schlauchbeutel-Verpackungseinheit nach den Figuren 23 bis 25 nach dem Einblasen von Luft durch das Luftrohr, dem Verschweissen rund um die untere Luftrohrmündung durch die Schweissbalken in den Vakuumleisten und nach dem bogenförmigen Verschweissen oben und vor dem anschliessenden Auseinanderfahren der oberen bogenförmigen Schweissbalken;
- Figur 31:: Die Situation nach dem Wegfahren der Stützplatte, dem nach oben Zurückziehen des Luftrohrs, und nach dem Einfahren eines Gleitkännels bzw. einer Gleitrinne oder Gleitplatte unter den Schlauchbeutel und nach dem Auseinanderfahren der Vakuumleisten, wonach der Schlauchbeutel auf den Gleitkännel bzw. die Gleitrinne oder die Gleitplatte fällt;
- Figur 32:: Einen bogenförmigen Schweissbalken mit ausserhalb des Schweissbalkens einem bogenförmigen gefederten Messer mit scharfer Klinge zum Abtrennen der aussen übrig bleibenden Folienreste;
- Figur 33:: Einen fertigen annähernd runden, nach unten und oben ausbauchenden Schlauchbeutel mit hermetisch darin eingeschlossenen Feststoffen und einem Luftanteil;
- Figur 34:: Einen fertigen solchen runden, nach unten und oben ausbauchenden Schlauchbeutel in einer fotografischen Wiedergabe, wie er mit einer Prototyp-Anlage erzeugt wurde, für den Machbarkeitsnachweis.

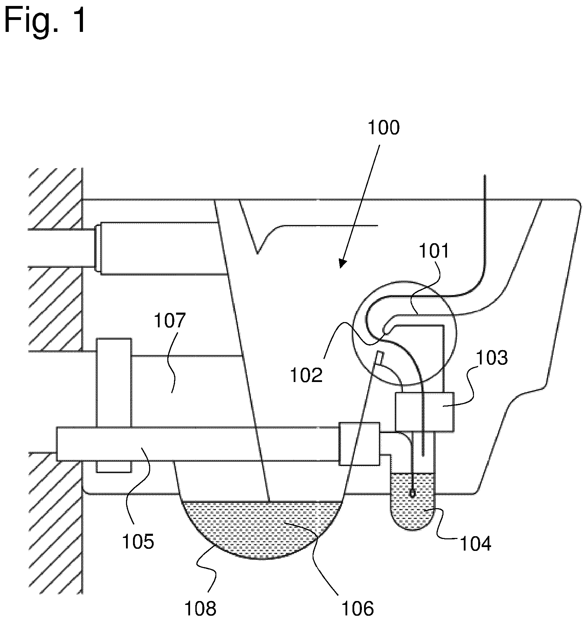

Zunächst zeigt die Figur 1 eine besondere, bereits existierende WC-Schüssel 100 in einem Längsschnitt, die geeignet ist für die Trennung von Urin und den festen Bestandteilen der Exkremente, einschliesslich des eingesetzten WC-Papiers und des Spülwassers, und zwar an der Quelle. Hierzu weist diese WC-Schüssel 100 vorne einen zusätzlichen podestförmigen Boden 101 auf, der sich von vorne gegen etwa die Mitte der Schüssel 100 hin erstreckt und dort in eine abfallende Nase 102 ausläuft. Der Urin wird auf diesem Boden 101 aufgefangen und er rinnt hernach über diese Abtropfnase 102 in eine unten anschliessende Auffangkammer 103 und wird über einen kleinen Siphon 104 über ein gesondertes, klein dimensioniertes Rohr 105 abgeleitet. Damit kann er in einen gesonderten Behälter geführt und dort gesammelt werden, für eine gesonderte Weiterverwendung. Die festen Exkremente fallen hinter der Abtropfnase 102 nach unten in das Siphonwasser 106 des grossen Siphons 108 und gelangen dann in das Ableitungsrohr 107, das hinten aus dem Siphon 108 aus der Klosettschüssel 100 führt. Im Weiteren befasst sich die Erfindung mit der Behandlung dieser festen Anteile der Exkremente sowie dem eingesetzten WC-Papier, das ebenfalls durch diesen grossen Siphon 108 zusammen mit den Exkrementen und dem Spülwasser abgeleitet wird.

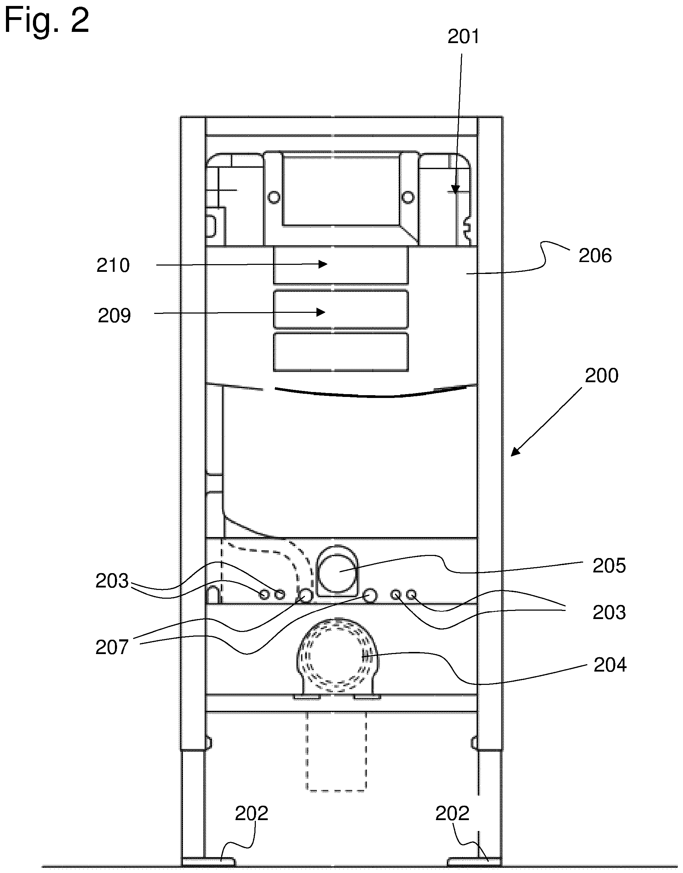

Die Figur 2 zeigt eine konventionellen Einbaueinheit für den Wandeinbau, zum anschliessenden Montieren eines Wand-WCs, in einer Draufsicht. Sie schliesst einen Einbaurahmen 200 ein, der auf zugehörigen Füssen 202 höhenverstellbar ruht und als Ganzes in einer aus einer Wand ausgenommenen Bucht einpasst. Eine solche Bucht in der rückwärtigen Wand misst in der Regel 500 mm in der Breite und 280 mm in der Tiefe, sowie bis ca. 1500 mm in der Höhe. Um bei Neuanlagen mehr Platz für das noch vorzustellende Einbaumodul für die Schlauchbeutelverpackung der Feststoffe zu schaffen, könnten die Buchten auch bis zur Raumhöhe nach oben erweitert werden. Innerhalb dieses Einbaurahmens 200 erkennt man in diesem Beispiel den Spülkasten 201 ganz oben angeordnet. Darunter ist eine Abdeckung 206 zu sehen, in welcher die Tasten 209 zur Betätigung des Spülkastens 201 untergebracht sind. Oberhalb des Anschluss-Stutzes 204 für das aus dem Siphon kommende Ableitungsrohr 107 aus Figur 1 befindet sich das Anschlussrohr 205 für die Spülung, und daneben, etwas unterhalb, sind die Gewindebüchsen 203 für das Anschrauben des Wand-WCs zu sehen, und allenfalls elektrische Anschlüsse 207 für den Anschluss eines Unterdusch-WCs, sowie Signalleitungen für das Steuern der ganzen Einrichtung über ein Tastenfeld 209 mit Display 210 oberhalb des WCs. Damit kann eine Spülung ausgelöst werden und im Falle einer vorhandenen Unterdusche auch deren Wartungszustand abgefragt werden.

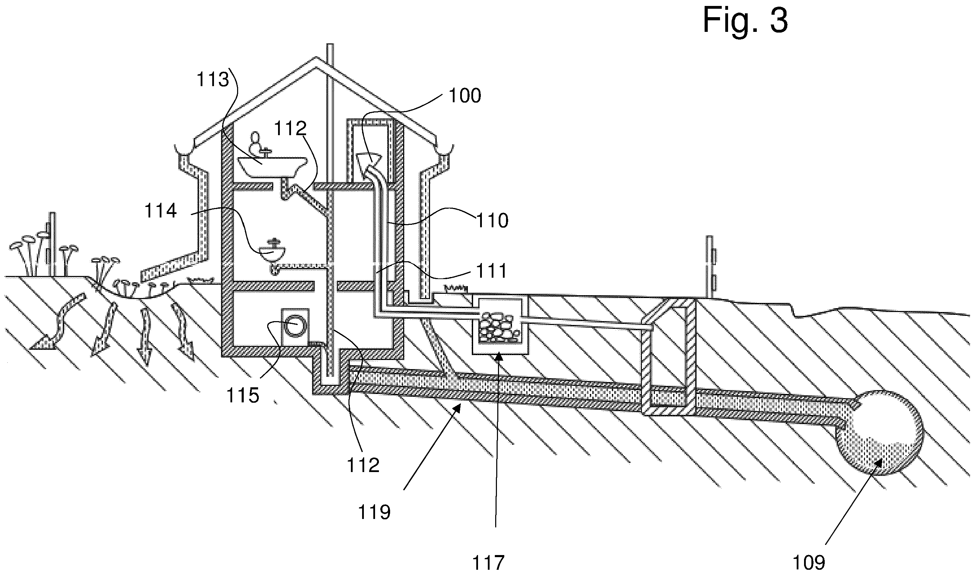

Wie die Figur 3 anhand eines Schnittes eines Hauses mit Kanalisationsanschlüssen zeigt, gibt es hier vom Wasserklosett WC 100 ein Ableitungsrohr 110 für den Urin, und ein grösseres 111 für die noch zu behandelnden festen Exkremente, wie das noch aufgezeigt wird. Daneben sieht man ein Ableitungsrohr 112 aus einer Badewanne 113, aus einem Lavabo 114 und aus einer Waschmaschine 115, das in herkömmlicher Manier in die Kanalisation 119 führt, dann in einen Abwasserkanal 109 und von diesem schliesslich in eine Kläranlage. Die festen Exkremente sowie auch das WC-Papier hingegen werden nach diesem vorliegenden Konzept besonders behandelt und in schwimmfähigen Beuteln hermetisch verpackt, und diese Beutel werden hernach im Spülwasser aufschwimmend abtransportiert. Sie können in einem Sammelbehälter 117 wie hier gezeigt zurückgehalten werden und werden von dort von Zeit zu Zeit entsorgt, oder sie schwimmen mit dem Spülwasser in der Kanalisation 119 und in den Abwasserkanal 109 bis zur Kläranlage und werden dort vom Abwasser separiert und gesondert entsorgt.

Entweder werden die Beutel also in dezentralen Sammelbehältern 117 in Auffangstationen für zum Beispiel ein einzelnes Haus oder mehrere Häuser aufgefangen, oder irgendwo unterwegs zur Kläranlage gesammelt und aus der Kanalisation 119 entfernt, oder aber das geschieht erst in der Kläranlage. Wichtig ist in jedem Fall, dass die menschlichen Abgänge gar nicht erst in das Kanalisationswasser gelangen. Sowohl im Urin wie auch in den Fäkalien befinden sich zunehmend auch Pharma-Rückstände, welche schwierig oder unmöglich aus dem Kanalisationswasser entfernbar sind. Entsprechend angereichertes Wasser kann sich trotz Klärung negativ auf die Fauna und Flora von Gewässern auswirken. Zum Beispiel wurde schon festgestellt, dass Hormone im Abwasser, etwa von ausgeschiedenen Wirkstoffen aus Antibaby-Pillen, auf die Fruchtbarkeit von Fischen und anderen Wasserlebewesen einen negativen Einfluss haben. Es ist daher angezeigt, dieses Problem schon ganz am Anfang anzugehen und das Spülwasser nicht mit Urin und Exkrementen zu verunreinigen, sondern es vielmehr einzig als Transportmedium zu verwenden. Das ist genau die Stossrichtung des vorliegenden Konzeptes, nämlich dass die Fäkalien möglichst wenig Wasser verschmutzen sollen, sondern das Spülwasser einzig zum Transportieren von hermetisch verpackten Beuteln eingesetzt wird und dessen Verschmutzung weitestgehend vermieden wird. Das entlastet erstens die Kläranlagen und hilft wie erwähnt auch zu vermeiden, dass Pharma-Rückstände letztlich in das Wasser von Flüssen und Seen und schliesslich ins Grundwasser gelangen.

Im Folgenden wird aufgezeigt, wie eine solche hermetische Verpackung der festen Exkremente nach diesem Konzept und die dazu nötige Einrichtung in kompakter Weise umgesetzt werden können. Die Einrichtung, wenn als Einbau-Einheit realisiert, weist dann eine Abmessung in der Breite wie alle andern üblichen Standardelemente von 500 mm oder vorteilhafter 750 mm auf. Die Anschlusspunkte für den Spülwasser-Zulauf und den Ablauf müssen die üblichen Abmessungen aufweisen, damit handelsübliche WC Anlagen an dieses Modul angeschlossen werden können. Vorteilhaft erweisen sich WC Modelle wie in Figur 1 gezeigt, die in der Lage sind, die festen und flüssigen Abgänge im WC zu trennen, wie es solche WCs bereits gibt, etwa von TOTO der Toijs Toki Co. Ltd. in Japan, oder das WC "Urin Trap" der Firma Keramik Laufen AG, Wahlenstrasse 46, CH-4242 Laufen. Die eigentliche Behandlung der Feststoffe hin zu hermetisch geschlossen verpackten kissenförmigen Beuteln wird ausschliesslich durch die erfindungsgemässe Einrichtung ausgeführt. In verschiedenen Stationen werden die Feststoffe portioniert und soweit hermetisch verpackt, dass ein Beutel in einem bestehenden oder neu zu erstellenden Ablaufröhrensystem im Gefälle schwimmend sich selbstständig durch das Leitungssystem fortbewegen kann. Als Quartiersammelstelle können die Beutel mit oder ohne Urinflüssigkeit ausserhalb des Gebäudes für die Wiederverwendung eingesetzt werden.Der Vorteil dieser Entsorgung ist unter anderem darin zu sehen, dass keine zusätzliche Belastung für den Benutzer oder Betreiber für den Betrieb der Einrichtung im Haushalt entstehen wird, ausser dass periodisch eine Verpackungsmaterial-Kassette ausgetauscht werden muss oder Desinfektionsmittel nachgefüllt werden müssen. Dies entspricht aber bloss einem Unterhaltsaufwand ähnlich wie für jenen eines Dusch-WCs.

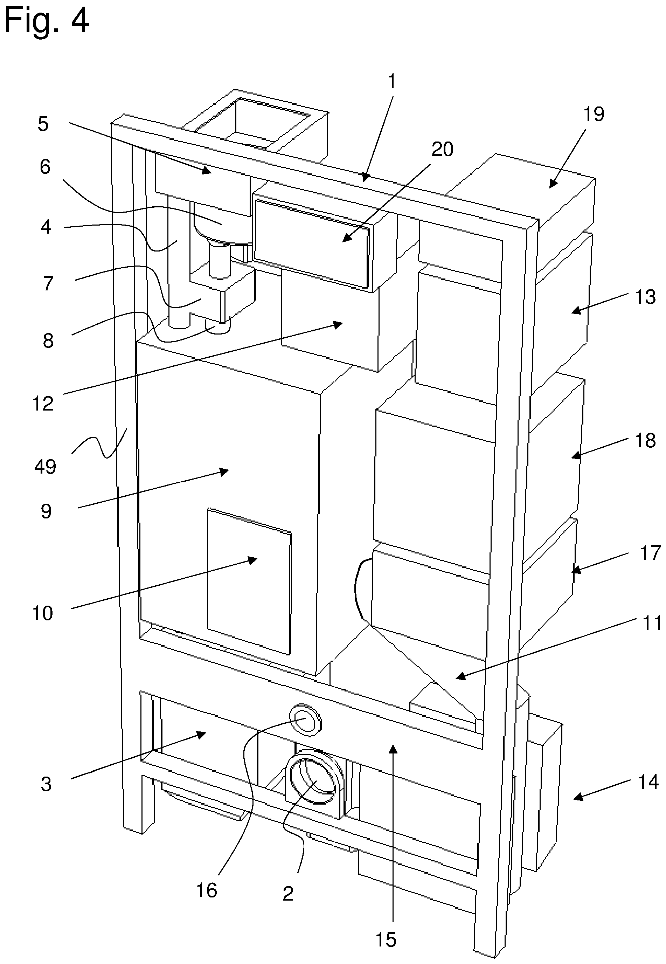

Die Figur 4 zeigt eine Einbau-Einheit 1 für die Umsetzung des Konzeptes der Verpackung der Feststoffe in eine Einbaubuchtals komplettes Einbau-Modul eingebaut, ähnlich wie ein Modul herkömmlich für den Einbau eines Spülkastens in eine Bucht in der Wand hinter dem WC eingesetzt wird.

Die Einbau-Einheit 1 ist von einem Stahlrahmen 49 umschlossen, der unten auf dem Boden der Bucht in der Wand steht. Unten im Einbaumodul erkennt man das Anschlussrohr 2 für das Ableitungsrohr 107 der WC-Schüssel100 aus Figur 1. Dieses führt in einen Feststoff-Abscheidetank3. Vom Feststoff-Abscheidetank 3 führt ein Steigrohr 4 hinauf zu einem Feststoff-Tank 5. Unten an demselben schliesst eine Portioniervorrichtung 6 in Form einer Trommel mit darunter einem Ventil 7 an. Von diesem führt ein Fallrohr 8 in eine Schlauchbeutel-Verpackungseinheit 9. In ihrem unteren Bereich erkennt man eine Wechselkassette 10, die Schlauchbeutel-Material auf einer Rolle enthält. Aus dieser Schlauchbeutel-Verpackungseinheit 9 führt das Abwasserrohr 11 in die Kanalisation. Der Spülkasten 12 mit Frischwasser ist hier oben zentral angebracht und rechts daneben befindet sich ein Grauwassertank 13. Unten rechts ist ein Braunwasserwassertank 14 eingebaut, dessen Wasser für einen ersten Spülungsschub eingesetzt wird. In der Mitte der Querstrebe 15 des Stahlrahmens 1 erkennt man den Anschluss 16 für das Spülwasser. Rechts über dem Abwasserrohr 11 befindet sich die Stromversorgung 17 und darüber eine elektronische Rechnereinheit 18 für die Steuerung der ganzen Einrichtung. Im obersten Bereich auf der rechten Seite der Einbau-Einheit befindet sich hier eine Ultraviolett-Desinfektionseinrichtung 19 für die Desinfektion der Spülflüssigkeit im Grauwassertank 13. Links daneben ist ein Bedienungspanel 20mit Anzeigen und Tasten für die Kontrolle und Bedienung aller Anlage-Komponenten eingebaut. Es ist klar, dass die ganze Nachbehandlung der festen Bestandteile der Abgänge absolut geruchsdicht in einem hermetisch abgeschlossenen System vollzogen werden muss, und die Komponenten des Systems aber dennoch für eine technische Wartung oder gegebenenfalls Reparatur zugänglich sein müssen. Hierzu sind entsprechende geruchsdichte Türen vorgesehen, die im Bedarfsfall geöffnet werden können.

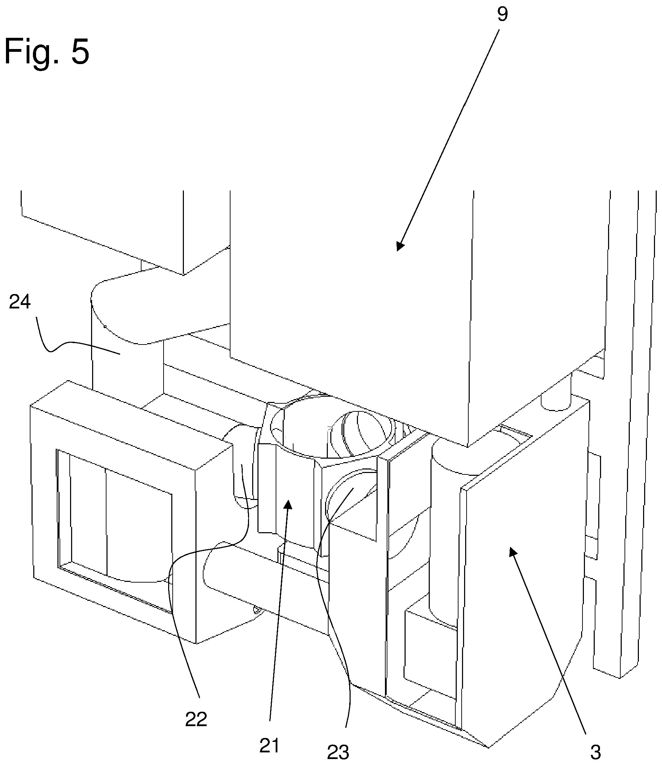

Die Figur 5 zeigt den unteren Bereich der Einbau-Einheit von hinten gesehen, gesondert dargestellt. Im Besonderen sieht man hier rechts die Schlauchbeutel-Verpackungseinheit 9 und darunter den Feststoff-Abscheidetank 3. Links davon erkennt man einen Verteiler in Form eines Drehventils 21. Das Ableitungsrohr 107 (Figur 1) vom WC ist an diesen Verteiler bzw. dieses Drehventil 21 angeschlossen und die von oben ankommenden Feststoffe sowie das Spülwasser und der Urin gelangen dann im Normalbetrieb über das Rohr 23 in den Feststoff-Abscheidetank 3 oder in einem Störungsbetrieb über das Rohr 22 direkt in das Fallrohr 24, welches in die Kanalisation führt. Es ist klar, dass die Anordnung der einzelnen Komponenten innerhalb eines Einbaumoduls unterschiedlich ausgeführt sein kann, je nach Ausgestaltung der einzelnen Komponenten. Der Feststoff-Tank 5 sowie auch der Spülwasser- 12 und der Grauwassertank 13 müssen allerdings möglichst weit oben angeordnet werden.

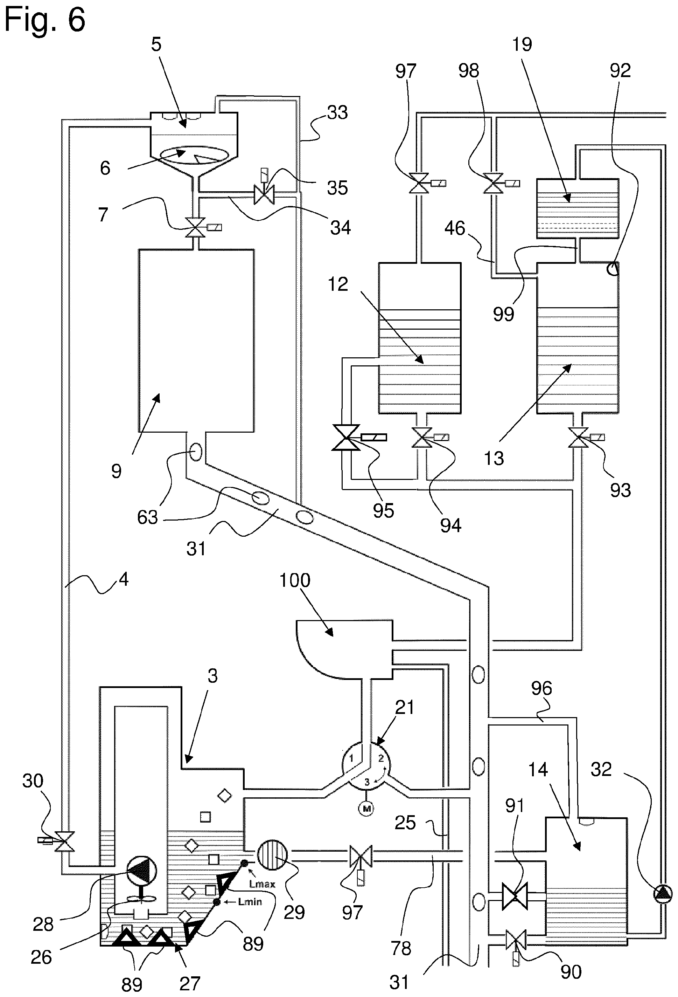

Die Figur 6 zeigt nun eine schematische Darstellung aller Komponenten der erfindungsgemässen Einbau-Einheit zum Abscheiden und Beutelverpacken der festen Exkremente. Die Toilettenabfälle, das heisst die festen Exkremente, das WC-Papier und der Urin, wenn er nicht vorher separat abgeleitet wird, gelangen nach einer Spülauslösung durch das Grauwasserventil 93 aus dem oben angeordneten Grauwassertanks 13, der ca. 4 Liter Grauwasser enthält, von der WC-Schüssel 100 via Siphon und Drehventil 21, wenn dieses in Stellung 1 steht, in den Feststoffabscheidetank 3. Die Feststoffe sinken darin nach unten ab und es werden Feststoffsensoren 89 aktiviert. Diese schalten die Feststoffpumpe 28 mit integriertem Zerhacker 26 ein und die Feststoffpumpe 28 pumpt die Feststoffe, vermischt mit Grauwasser, via das hierzu geöffnete Ventil 30 über das Steigrohr 4 nach oben in den möglichst weit oben im Einbaumodul platzierten Feststofftank 5. Sobald die Feststoffsensoren 89 das Fehlen von Feststoffen im unteren Feststoff-Abscheidetank 3 detektieren, stellt die Feststoffpumpe 28 ab und das Ventil 30 schliesst, um ein Zurückfliessen des wässrigen Feststoffbreis zu verhindern. Das Steigrohr 4 dient ebenfalls als Speicher für den Feststoffbrei. Das Steigrohr 4 ist grundsätzlich immer gefüllt.

Gleichzeitig fliesst das überschüssige Grauwasser passiv via Rückhaltesieb 29 und geöffnetem Braunwasserventil 97aus dem unteren Feststoff-Abscheidetank 3 durch das Überlaufrohr 78 in den Braunwassertank 14 mit seinen etwa 4 Litern Nutzinhalt, gemessen bis zur Mündung der Einspeiseöffnung des Überlaufrohres 78. Eine oben aus dem Braunwassertank 14 abzweigende Entlüftungsleitung 96 leitet den durch das Einfüllen erzeugten Überdruck in die Kanalisation ab. Nach Erreichen der 4 Liter-Grenze im Braunwassertank 14, wird das Überlaufventil 91 geöffnet, um den Inhalt des Braunwassertanks auf 2 Liter abzusenken.

Ist dies erreicht, so wird eine Nach-Spülung aus dem Frischwasser-Tank 12, der über das Ventil 97 mit Frischwasser versorgt wird, mit etwa 2 Litern durch das Ventil 95 ausgelöst. Dadurch erfolgt eine Reinigungsspülung des WC-Siphon. Dieses relativ saubere Wasser gelangt nun ebenfalls passiv in den Braunwassertank 14. Bei Abschluss dieses zweiten Spül- und Füllvorgangs wird das damit in der Qualität verbesserte Braunwasser im Umfang von 4 Litern durch die Förderpumpe 32 in die oben angeordnete UV Desinfektionsanlage 19 befördert. Die Förderpumpe 32 wird intermittierend eingeschaltet, um nur so viel Braunwasser zu befördern wie die UV Desinfektionsanlage 19 verarbeiten kann. Wird der Grauwassertank 13, der über das Ventil 98 mit Frischwasser und von der Desinfektionseinrichtung 19 über die Leitung 99 gespeist wird, nach Abschluss der Förderung durch die Förderpumpe 32 nicht auf 4 Liter Inhalt gefüllt, so wird dieser automatisch durch Frischwasser endgefüllt. Dieser zweistufige Spülvorgang, zuerst mit Grauwasser und dann mit Frischwasser, erweist sich als besonders ökonomisch. Für eine 6-Liter Spülung werden nämlich nur 2 Liter Frischwasser benötigt und zugeführt. Das spart kostbares Frischwasser.

Das Steuertableau des WC's weist wie üblich eine kleine und eine grosse Auslöse-Taste für die Spülung auf. Die grosse Taste dient für den WC-Gang mit festen Abgängen, kleine Taste für eine blosse Urin-Abgabe. Folgende Situationen sind zu unterscheiden:
A) Reine Urinabgabe: Bei reiner Urinabgabe wird durch die kleine Taste die Spülung durch den Frischwassertank 12 ausgelöst. Das Drehventil 21 wird unmittelbar vor Spülung auf Position 2 geschaltet und der Urin gelangt konventionell in das Abgangsrohr 31 und damit in die Kanalisation.
B) Fehlmanipulation mit grosser Taste: Wird die grosse Taste versehentlich gedrückt, nachdem keine Feststoffe abgegeben und die Feststoff-Sensoren 89 keine Feststoffe im Feststoffstoff-Abscheidetank 3 festgestellt haben. so wird eine 4 Liter Grauwasserspülung ausgelöst. Es wird deshalb keine 2-Liter Frischwasserspülung ausgelöst. Das unverbrauchte Grauwasser gelangt in den Braunwassertank 14 bei welchem das Überlaufventil 91 geschlossen ist. Die Förderpumpe 32 pumpt das nicht genutzte Grauwasser wieder intermittierend in die UV-Desinfektionsanlage bis der Grauwassertank 13 wieder gefüllt ist.
C) Überlastung der Anlage: Wird die Toilette in hoher Frequenz benutzt, etwa bei Parties oder sonst grosser Gästeschar in der Wohnung, so kann eine Überlastung der Anlage eintreten: Es kann sein, dass dann die Verarbeitung der vorher abgegebenen Feststoffe noch nicht abgeschlossen wurde. In diesem Fall schaltet die Anlage auf Notbetrieb um. Das Drehventil 21 schaltet auf Stellung 2. Nun öffnet sich am Frischwasserspülkasten 12 im Modul das Ventil 94 und spült mit 4 bis 5 Litern die Feststoffe in das Rohr 31 für die Kanalisation. Sobald die im Hintergrund ablaufende Verarbeitung der Feststoffe abgeschlossen ist, wird wieder auf Normalbetrieb umgeschaltet.

Eine gesonderte Ableitung 25 für den gesondert aufgefangenen Urin führt aus dem WC 100 in einen separaten, hier nicht dargestellten Auffangbehälter. Das Drehventil 21 unterhalb des Syphons des WCs 100 ist motorgesteuert und kann drei Positionen einnehmen: Eine erste Position 1 für einen Normalbetrieb, indem das ankommende Spülgut aus Wasser, allenfalls auch Urin, wenn dieser nicht abgesondert aufgefangen wird, und Feststoffen wie Exkrementen und WC-Papier in den anschliessenden Feststoff-Abscheidetank 3 weitergeleitet wird. Eine zweite Position 2 dient einem Störungsbetrieb, in welchem das Drehventil 21 das Spülgut direkt in konventioneller Weise in das Ablaufrohr 31 und sodann in die Kanalisation ableitet und eine dritte Position 3 ist für einen Reinigungsbetrieb bestimmt, zur Rückspülung des anschliessenden Feststoff-Abscheidetanks 3. Das Drehventil 21 wie auch der Feststoff-Abscheidetank 3 können durch in ihrem Innern angeordnete Reinigungsdüsen abgereinigt und durchgespült werden. Es ist vorgesehen, den Rechner 18 einer SPS-Steuerung (Figur 4) mit einem Webserver zu verbinden, damit der Zustand des Systems auch dezentral abgefragt und dargestellt werden kann. Dazu können auch im Innern installierte Webcams dienen, die ihrerseits bei Bedarf von Reinigungsdüsen abgereinigt werden können.

Während des Spülvorgangs fliesst das überschüssige Grauwasser passiv via Rückhaltesieb 29 und geöffnetem Braunwasserventil 89 in den Braunwassertank 14 mit ca. 4 Litern Nutzinhalt ab dessen Einspeiseöffnung. Eine Entlüftungsleitung 96 leitet den durch das Einfüllen erzeugten Überdruck in die Kanalisation ab. Das Überlauf-Ventil 91 ist geöffnet und es stellt sich nach einer zu definierenden Zeit ein Füllvolumen von etwa 2 Litern ein. Ist dies erreicht, so wird die Spülung aus dem Frischwasser-Tank 12 mit ebenfalls 2 Litern durch Ventil 95 ausgelöst und das Überlauf-Ventil 91 geschlossen. Dieses relativ saubere Wasser gelangt nun ebenfalls passiv in den Braunwassertank. Bei Abschluss des zweiten Füllvorgangs wird das durch Frischwasser verbesserte Braunwasser im Umfang von 4 Litern durch die Förderpumpe 32 intermittierend in die UV Desinfektionsanlage befördert. Der Feststoff-Abscheidetank 3 ist grundsätzlich immer bis zur Marke Lₘₐₓ gefüllt. Bei Erreichen des Niveaus Lₘᵢₙ stellt die Feststoff-Förderpumpe 28 auf jeden Fall ab, da unter diesem Pegel kein Material mehr angesaugt werden kann.

Vom ganz oben in der Einbau-Einheit platzierten Feststofftank 5 aus wird der dickflüssige Brei aus Exkrementen, WC-Papier und wenig Wasser über eine Portioniervorrichtung6 und ein Ventil 7 in die darunter angeordnete Schlauchbeutel-Verpackungseinheit 9 abgegeben. Das Füllniveau des Feststofftanks 5 wird von einem Sensor überwacht, sodass die Feststoffpumpe 28 nur laufen kann, wenn das Niveau im Feststofftank 5 nicht zu hoch ist. Das Ventil 7 wird von der Portionier-Einheit 6 aus gesteuert geöffnet und geschlossen.

Eine Entlüftungsleitung 33 führt aus dem Feststofftank 5 in das Abflussrohr 31 zur Kanalisation, damit im Feststofftank 5 niemals ein Überdruck entstehen kann. Unten ab der Portioniervorrichtung6 führt eine Notleitung 34 über ein Magnetventil 35 in das Abflussrohr 31 und in die Kanalisation. Wenn aus irgendeinem Grund die Schlauchbeutel-Verpackungseinheit 9 defekt sein sollte, so kann der Feststofftank 5 direkt in die Kanalisation entleert werden.

Das bis jetzt vorgestellte Konzept setzt für den Hochtransport der Feststoffe auf eine unten im Feststoff-Abscheidetank 3 angeordnete Fäkalienpumpe, welche die Feststoffe zerkleinert und zusammen mit Spülwasser in den oberen Feststofftank befördert. Nachfolgend wird eine alternative Realisierung für diesen Hochtransport der Feststoffe vorgestellt, um hernach die Weiterverarbeitung der Feststoffe oder des Breis aus Feststoffen in der Dosier-Einrichtung zwecks Abgabe in die Verpackungseinheit sicherzustellen. Alternativ gegenüber dem oben beschriebenen System, könnte/müsste aber nicht, hier das 120 Grad Drehventil entfallen und auch der obere Grauwassertank könnte nicht mehr nötig sein, und somit auch nicht eine WC-Spülung in zwei Phasen. Das würde das System beträchtlich vereinfachen und würde in einem herkömmlichen Wasserverbrauch bei der Spülung resultieren.

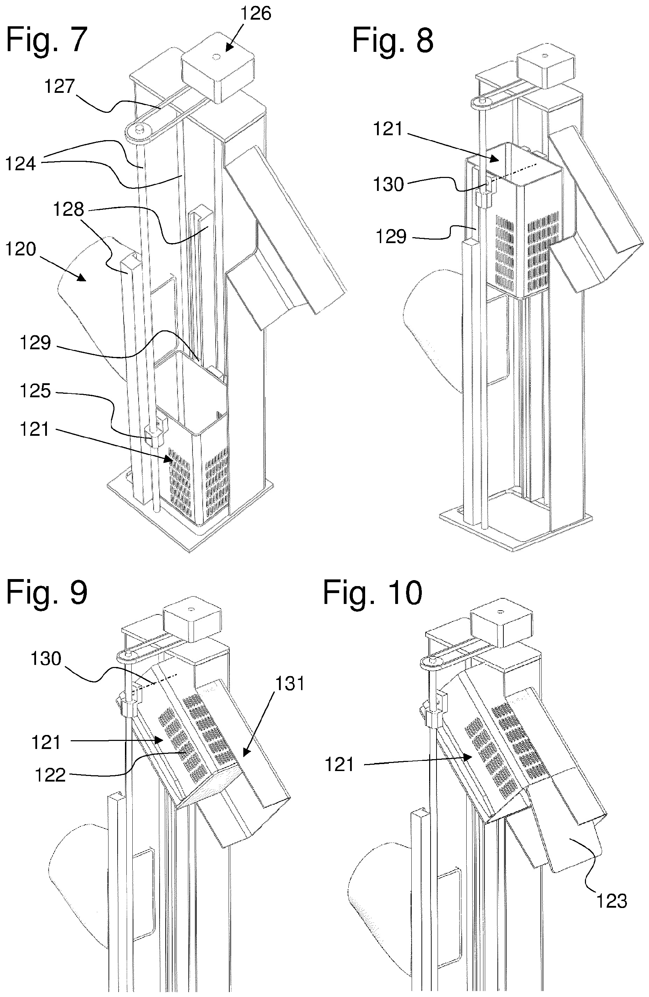

Hierzu wird ein Liftsystem eingesetzt, mit einem auf und ab verfahrbaren Lift-Korb, wie dieses Liftsystem au den Figuren 7 bis 10 hervorgehen. Durch Auslösung der WC-Spülung gelangen die Feststoffe und das Spülwasser via Einlassrohr 120 des Liftsystems in den Lift-Korb 121. Die Feststoffe werden im Lift-Korb 121 abgelagert und das Spülwasser gelangt ü§ber die seitlichen Schlitze 122 im Lift-Korb 121 direkt in die Kanalisation. Der Boden des Lift-Korbs 121 wird von einer Lift-Korb Bodenklappe 123 gebildet, die mittels einer Zugfeder oder Torsionsfeder in der geschlossenen Position gehalten wird. Nach seiner Befüllung wird der Lift-Korb 121 hochgefahren. Dazu dient ein Antrieb durch zwei symmetrisch zum Lift-Korb 121 angeordnete Gewindestangen 124 mit den beiden Führungsgewinde-Muttern 125 am Lift-Korb 121. Ein Antriebs-Motor 126 ist über einen Zahnriemen 127 mit den zwei Gewindestangen 124 verbunden. Magnetische Schalter melden der Steuerung die Positionen des Lifts-Korbes 121. Der Lift-Korb 121 wird durch beidseitig angeordnete Führungsprofile 128 in der Spur gehalten. Dazu sind beidseitig des Lift-Korbs zu 121 komplementäre Führungsrippen 129 angebracht. Beide Profile 128, die seitlichen fest montierten und die Führungsrippen 129 am Lift-Korb 121 sind an deren Ende V-förmig ausgebildet, sodass beim Absenken des Lift-Korbs 121 in jedem Fall eine korrekte Führung wieder eingenommen wird.

Die Figur 8 zeigt die Situation beim Hochfahren des Lift-Korbes 121. Seine seitlichen Führungsrippen 129 sind hier schon zu 2/3 aus den Profilen 128 nach oben herausgefahren. Ist der Lift-Korb 121 an der oberen Position angelangt, so sind die Führungsrippen 129 seitlich am Lift-Korb 121, die bisher in den Führungsprofilen128 nach oben glitten, aus diesen herausgefahren und der Lift-Korb 121 hängt somit frei an den beiden gegenüberliegenden Führungsgewinde-Muttern 125. Diese Muttern 125 sind am Lift-Korb 121 schwenkbar gelagert, sodass nun der Lift-Korb 121 in dieser frei hängenden Position um die Schwenkachse 130 gekippt werden kann.

In Figur 9 ist der Lift-Korb 121 in der seitlich um die Achse 130 ausgeschwenkten Position dargestellt. Er ragt in dieser ausgeschwenkten Position in eine Ausschüttgosse 131. Für das Ausschwenken greift zum Beispiel ein hier nicht dargestellter Fanghaken den Lift-Korb 121 an einem unteren seitlichen Verbindungspunkte und schwenkt oder kippt ihn soweit, bis der Lift-Korb 121 mit der Ausschüttgosse 131 fluchtet. Ein weiterer Fanghaken greift die Lift-Bodenklappe 132 und öffnet diese gegen die wirkende Federkraft soweit, dass die im Lift-Korb 121 gelagerten Feststoffe zwecks weiterer Verarbeitung aus dem Lift-Korb 121 herausrutschen und in die Portionier-Vorrichtung gelangen. Es ist auch möglich, die beiden Bewegungen Ausschwenken des Lift-Korbes 121 und Ausklappen der Bodenklappe 123 durch einen kinematischen Antrieb zusammenzufassen.

Ist der Lift-Korb 121 entleert, so laufen seine Bewegungen in umgekehrter Richtung und Reihenfolge analog zu obigem Geschilderten ab. Die Feder an der Lift-Bodenklappe 123 schliesst den Lift-Korb 121 wieder und bei der folgenden Abwärtsbewegung des Lift-Korbs 121 wird dieser durch die V-förmig angeordneten Führungsprofile 128 eingemittet und in der Spur gehalten. Im Falle einer Störung des Systems kann der Lift-Korb 121 auf halber Höhe positioniert werden und der Transport der Feststoffe erfolgt wie herkömmlich bzw. konventionell direkt in die Kanalisation.

Diese können durch Schrauben-Kompression (Prinzip Fleischwolf) oder ähnliches Prinzip zu zylindrischen Feststoffe gepresst werden. Die Dosierung der Feststoffe erfolgt durch die Anzahl der Umdrehungen der Schrauben-Kompression. Im Anschluss erfolgt deren Abgabe nun im Folgenden beschriebenen Verpackungseinheit. Alternativ dazu könnten die Feststoffe dosiert mit Wasserzugabe versehen und anschliessend zu einem Brei mit definierter Viskosität gemixt werden, um anschliessend durch die Dosiereinrichtung in die Verpackungseinheit zu gelangen.

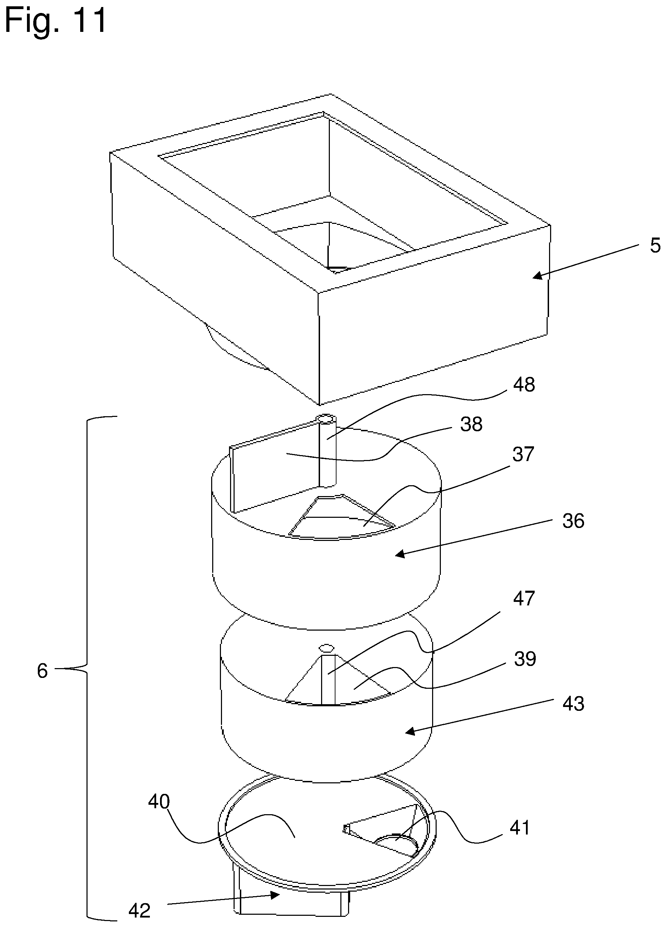

Die Figur 11 zeigt den Feststoff-Tank 5 und die Portioniervorrichtung 6 für das portionierte Fallenlassen von Feststoff-Portionen aus dem Feststofftank 5 in die Schlauchbeutel-Verpackungseinheit 9 in einer Explosionsdarstellung längs einer zentralen Drehachse. Ganz oben ist der Feststoff-Tank 5 oben geöffnet dargestellt. Darunter erkennt man die Portioniervorrichtung 6 mit einem Rotorgehäuse 36 und darin einer Eintrittsöffnung 37 und einem darin einzusetzenden Schwenkhebel 38. Der Rotor 43 ist unterhalb des Rotorgehäuses 36 gezeigt und weist einen Durchgangskanal 39 auf. Zuunterst sieht man einen stationären Rotorgehäuseboden 40 mit seiner Austrittsöffnung 41 und darunter einen elektrischen Doppelantrieb 42 mit zwei koaxialen Achsen. Eine Achse 47 dreht den Rotor 43, eine weitere Achse 48dreht den Schwenkhebel38 in die jeweils vorgesehenen zwei Drehpositionen.

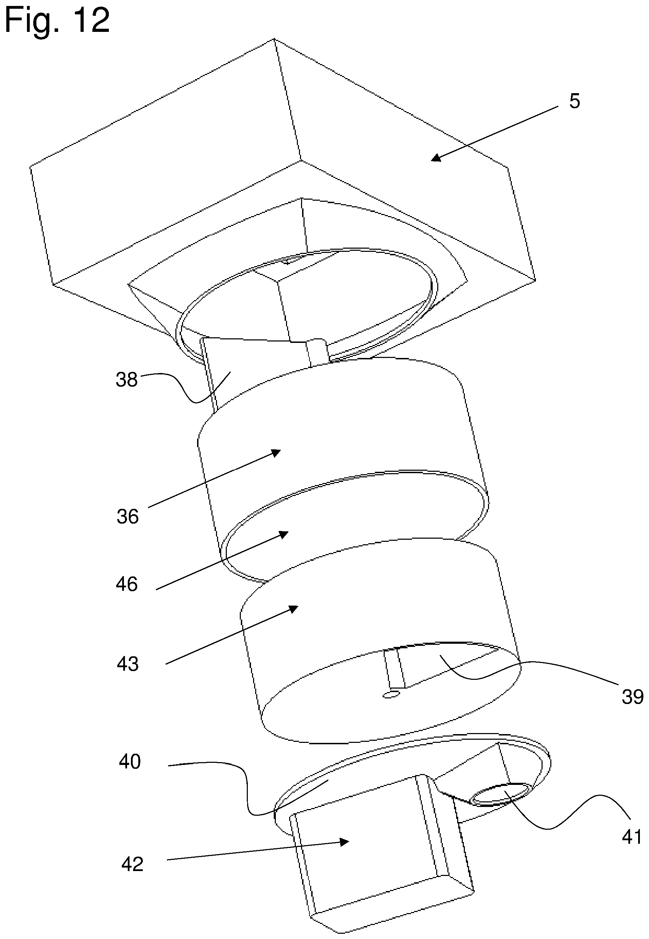

Anhand von Figur 12, welche diese Portioniervorrichtung nach Figur 11 von schräg unten gesehen darstellt, wird sie weiter erklärt. Der Durchgangskanal des Rotors 43 befindet sich unter der Eintrittsöffnung 46 des starren Rotorgehäuses 36. Der Schwenkhebel 38 rotiert langsam über die Eintrittsöffnung und füllt den Durchgangskanal des Rotors 43. Der Schwenkhebel 38 kann 360° umlaufend oder auch richtungsumkehrend betrieben werden. Der Rotor 43 dreht sich dann weiter, bis sich dessen Durchgangskanal 39 über der Austrittsöffnung 41 im Rotorboden 40 befindet. Nun läuft die Mischung nach unten via das Ventil 7 in die Schlauchbeutel-Verpackungseinheit 9. Zwei seitliche Öffnungen oben im Durchgangskanal 39 des Rotors 43 und im gegenüberliegenden Rotorgehäuse 36 verhindern durch eine Luftzufuhr, dass sich ein Unterdruck bilden kann, welcher den Austritt der Mischungsportion behindern würde.

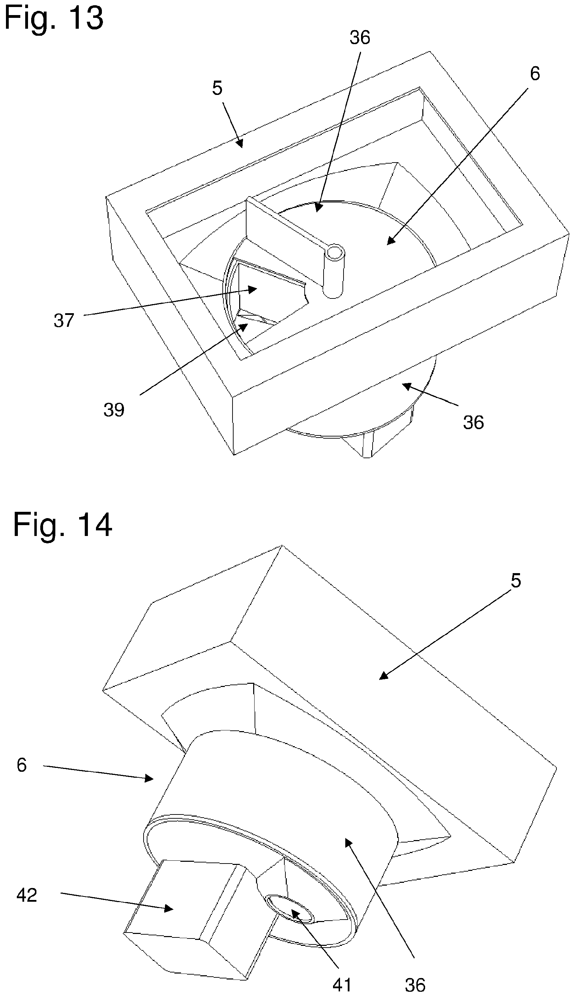

Die Figur 13 zeigt die zusammengesetzte Portioniervorrichtung6 von schräg oben gesehen und die Figur 14 zeigt sie von schräg unten gesehen. Diese Portioniervorrichtung6 gibt also abgemessene, gleichgrosse Portionen über das darunter angeordnete Dosierventil 7 in die Schlauchbeutel-Verpackungseinheit 9 ab. Im Folgenden wird diese Schlauchbeutel-Verpackungseinheit 9 genauer beschrieben, anhand ihrer Funktionweise auf der Zeitachse.

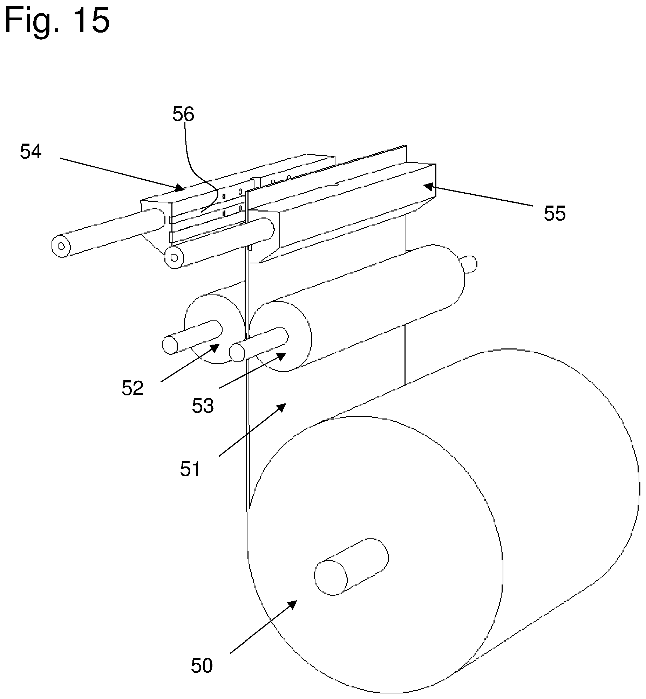

Die Figur 15 zeigt das Innere der Schlauchbeutel-Verpackungseinheit 9 zunächst in einem Ausgangszustand. Sie schliesst eine "Endlos-Rolle" 50 eines Schlauches 51 ein, aus dem Schlauchbeutel durch Querschweissungen erzeugbar sind. Der abgerollte Abschnitt führt durch zwei federbelastet aneinander abrollenden Pressrollen 52, 53. Am oberen Ende des abgerollten Abschnittes erkennt man auf beiden Seiten je eine Vakuumleiste 54, 55 mit je einer darin integrierten, elektrisch heizbaren Schweissleiste 56.

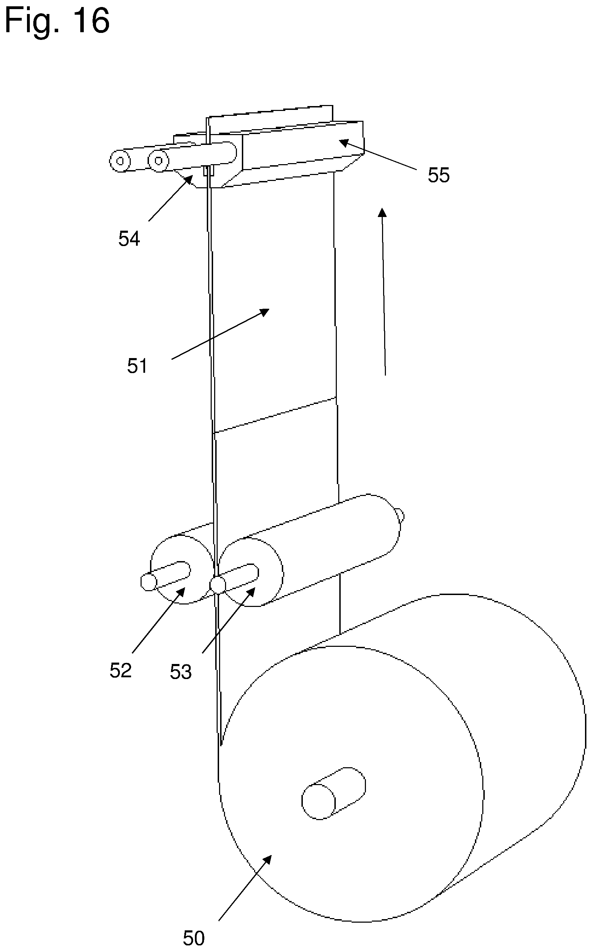

Aus diesem Ausgangszustand erfolgt das Anpressen der beiden Vakuumleisten 54, 55, die sich auf beiden Seiten des Schlauchmaterials 51 festsaugen und hernach motorisch aufwärtsgefahren werden, unter Abrollen von Schlauchmaterial 51 ab der Rolle 50 und Durchziehen durch die beiden Presswalzen 52, 53, sodass sich schliesslich der Zustand wie in Figur 16 dargestellt einstellt. Die Presswalzen 52, 53 können bedarfsweise motorisch angetrieben sein, bedarfsweise drehmomentgesteuert, damit unter keinen Umständen die Schlauchbeutelmündung von den Vakuumleisten 54, 55 abreissen kann. Es wurde in der Darstellung nach Figur 12 ein Schlauchabschnitt zur Bildung eines einzelnen Schlauchbeutels hochgezogen und er wird weiterhin von den Vakuumleisten 54, 55 in dieser Position festgehalten.

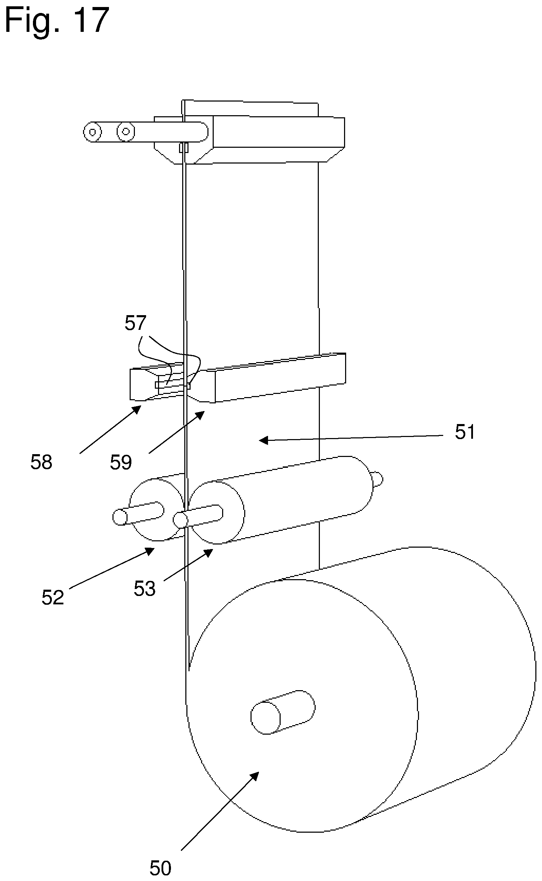

Der nächste Schritt ist in Figur 17 dargestellt: Zwei elektrisch heizbare Schweissbalken 58, 59 mit Heizleisten 57 zum Schweissen werden oberhalb der Pressrollen 52, 53 von beiden Seiten an das Schlauchmaterial 51 herangefahren und zusammengepresst. Dann erfolgt eine Querschweissung des Schlauchmaterials 51 an dieser Stelle, womit aus dem Schlauchabschnitt ein unten dicht verschlossener und oben offener Beutel gebildet wird.

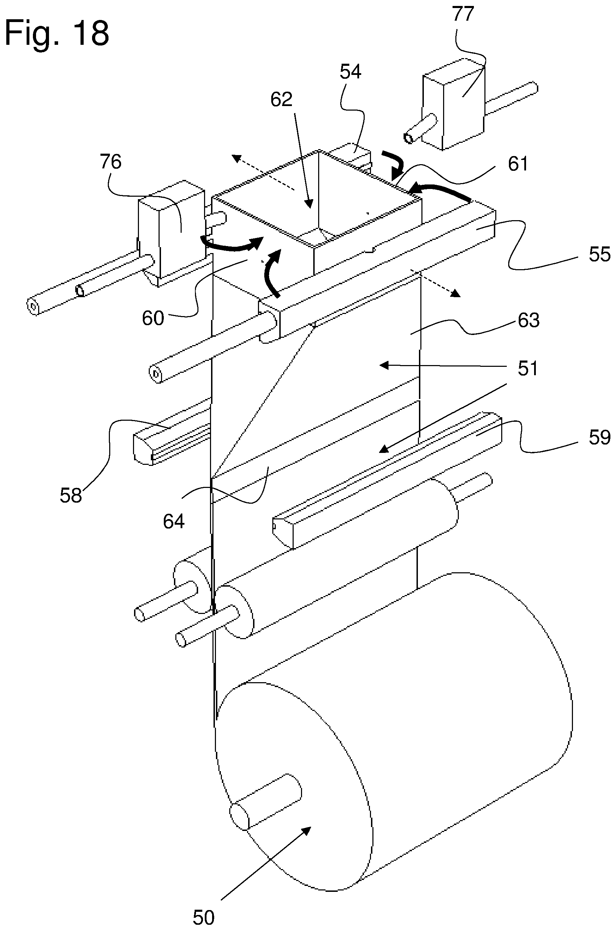

Was dann weiter passiert zeigt die Figur 18. Hier sind die Vakuumpumpen 76, 77 für die Vakuumleisten 54, 55 eingezeichnet. Die beiden unteren Schweissbalken 58, 59 sind bereits auseinandergefahren, in den hier gezeigten Zustand, und die beiden oberen Vakuumleisten 54, 55 fahren ebenfalls ein stückweit auseinander. Dadurch lösen sich die Endbereiche 60, 61 des Schlauchmaterials 51 von den Vakuumleisten 54, 55 und ihren Heiz- bzw. Schweissbalken 56, wie mit den gekrümmten Pfeilen angedeutet ist, während je eine Hälfte der Schlauchbreite im mittleren Bereich von den Vakuumleisten 54, 55 weiterhin festgehalten bleibt. Im Ergebnis bildet sich eine quadratische Öffnung 62 des Schlauchbeutels 63. Unten am Schlauchbeutel 63 erkennt man einen sich quer über den Schlauch 51 erstreckenden verschweissten, bandförmigen Bereich 64.

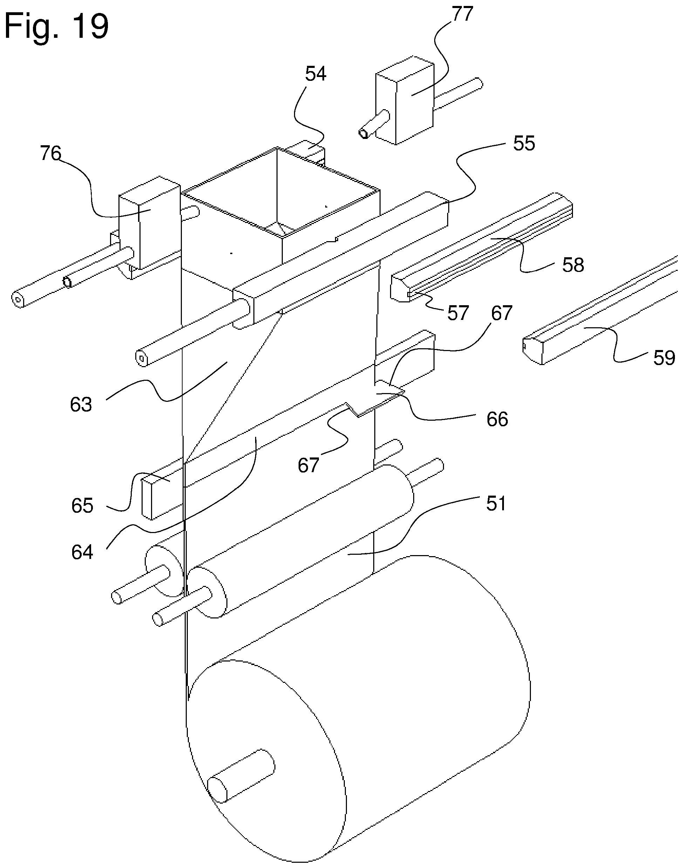

Im nächsten Schritt, wie in Figur 19 gezeigt, wird der Schlauchbeutel 63 längs der Mitte dieses bandförmigen Bereiches 64 von einer Schneidevorrichtung 65 mit Trennmesser 66 zerschnitten. Das Trennmesser 66 fährt entlang eines Balkens der Schneidevorrichtung 65 und seine schief zur Schlauchmaterialebene verlaufenden Schnittkanten 67 schneiden den Schlauch 51 durch. Die Schweissbalken 58, 59 mit ihren elektrischen heizbaren Schweissleisten 57 sind derweil von ihrem Antrieb translatorisch vom Schlauch 51 weggefahren.

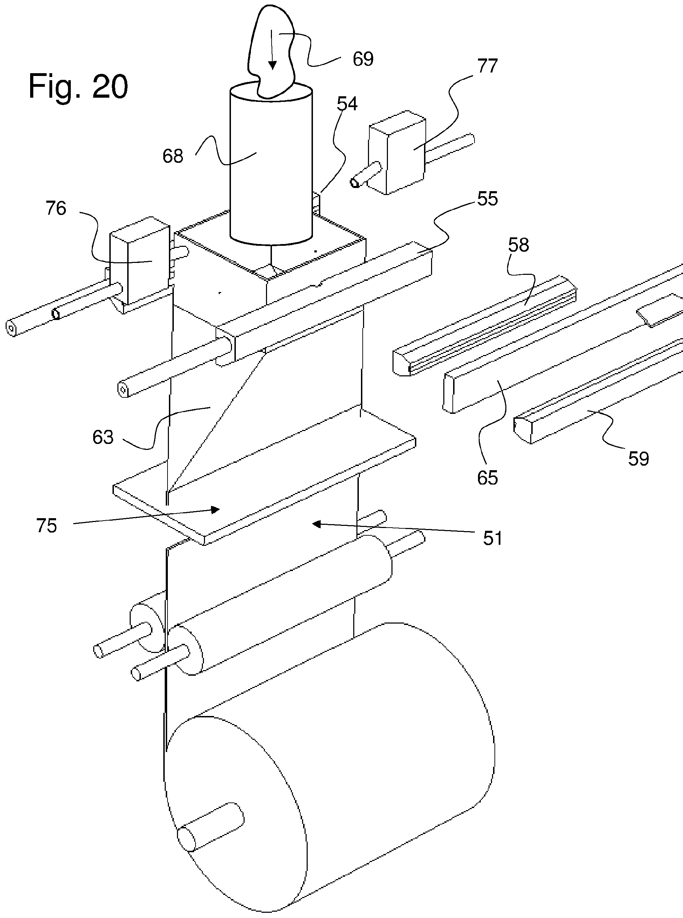

Jetzt ist der Beutel 63 frei hängend von den oberen Vakuumleisten 54, 55 gehalten. Wie die Figur 20 zeigt, wird die Schneidevorrichtung 65 ebenfalls translatorisch vom Schlauch 51 weggefahren und unterhalb des hängenden Beutels 63 wird eine motorisch verschiebbare Stützplatte 75unter den Beutel 63 gefahren. Die Vakuumleisten 54, 55 werden hernach nach abwärts gefahren, bis der Beutel 63 lose auf der Stützplatte 75 aufsteht, also nicht mehr hängt. In diesem Zustand wird vom oberhalb der Schlauchbeutel-Verpackungseinheit 9 angeordneten Ventil 7 (Figur 6) aus ein Zufuhrrohr 68 ein stückweit in den oben offen gehaltenen Beutel 63 abgesenkt und eine Feststoff-Portion 69 wird in den Beutel 63 fallengelassen.

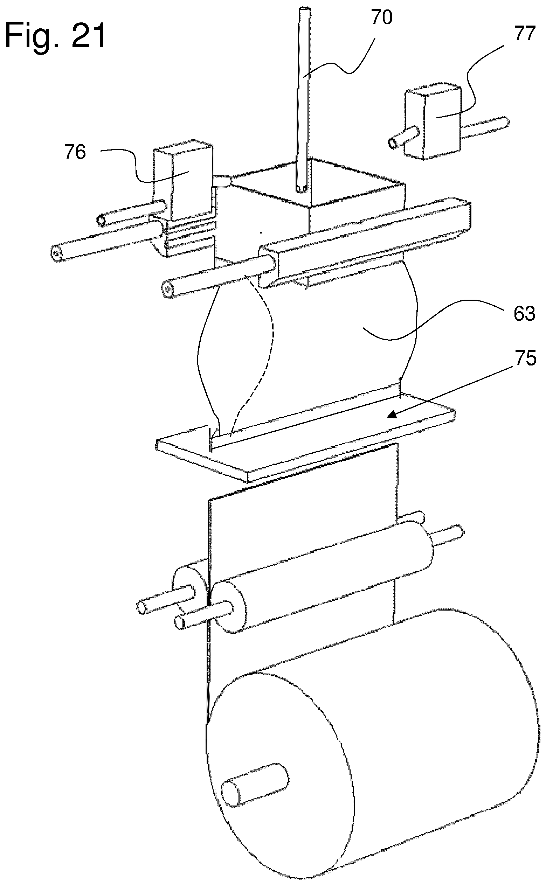

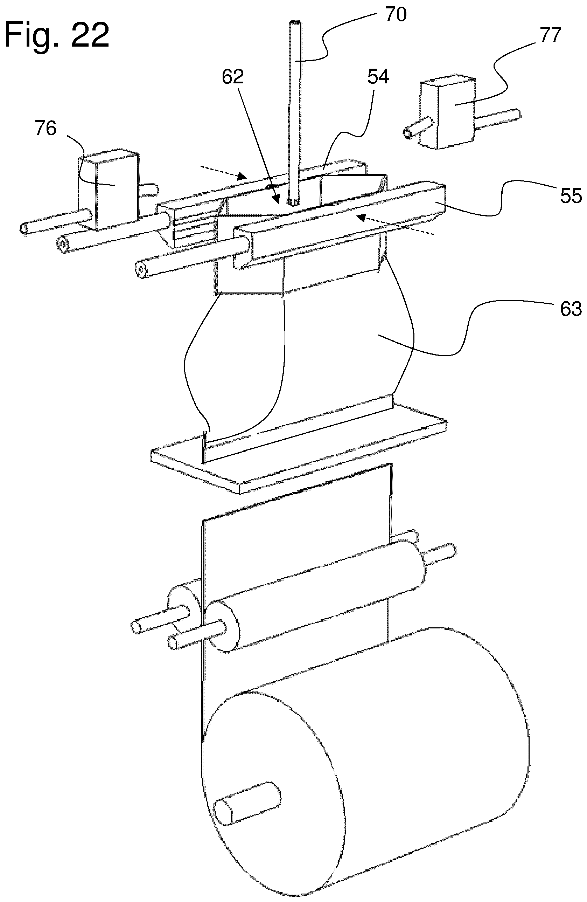

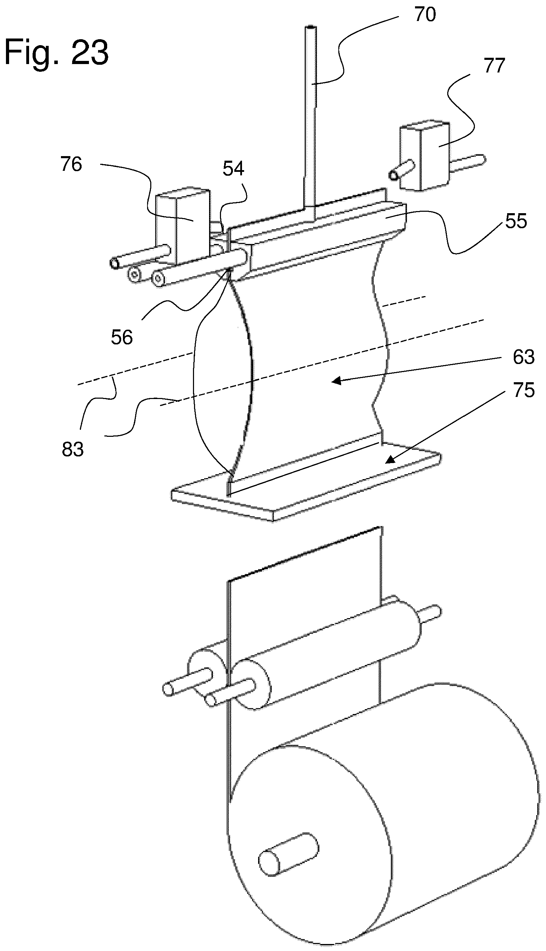

Die nächste Figur 21 zeigt die Schlauchbeutel-Verpackungseinheit 9 mit dem gefüllten, oben noch offen gehaltenen, auf der Stützplatte 75 ruhenden Beutel 63 nach Rückzug des Zufuhrohrs 68 und nach dem von oben Einführen eines Luftrohrs 70 in den Beutel 63. Der Beutel 63 ist jetzt ausgebaucht vom Inhalt. Die Figur 22 zeigt die Schlauchbeutel-Verpackungseinheit 9 beim anschliessenden Verschliessen der oberen Beutelmündung 62 des Beutels 63. Die Vakuumleisten 54, 55 fahren wie mit den strichlinierten Pfeilen angezeigt zueinander hin und klemmen die Beutelmündung 62 zwischen sich ein. Die Figur 23 zeigt den am Ende erreichten Zustand. Jetzt wird über dasLuftrohr 70 je nach Bedarf etwas Luft in den Beutel 63 gepumpt, sodass er ausbaucht, um einen Luftanteil zu enthalten, damit er später in der Kanalisation zuverlässig schwimmend befördert wird. Das Mass dieser Ausbuchtungen des entstandenen Beutels 63 kann über den Innendruck gesteuert werden. Sobald ein eingestellter Druck erreicht ist, stellt die Luftpumpe ab. Oder die Beutelausbuchtung wird durch die Ausdehnung der Ausbuchungen zum Beispiel mit beidseitigen Lichtschranken 83 beschränkt. Sobald die Lichtschranken 83 unterbrochen werden, stellt die Luftpumpe ab.

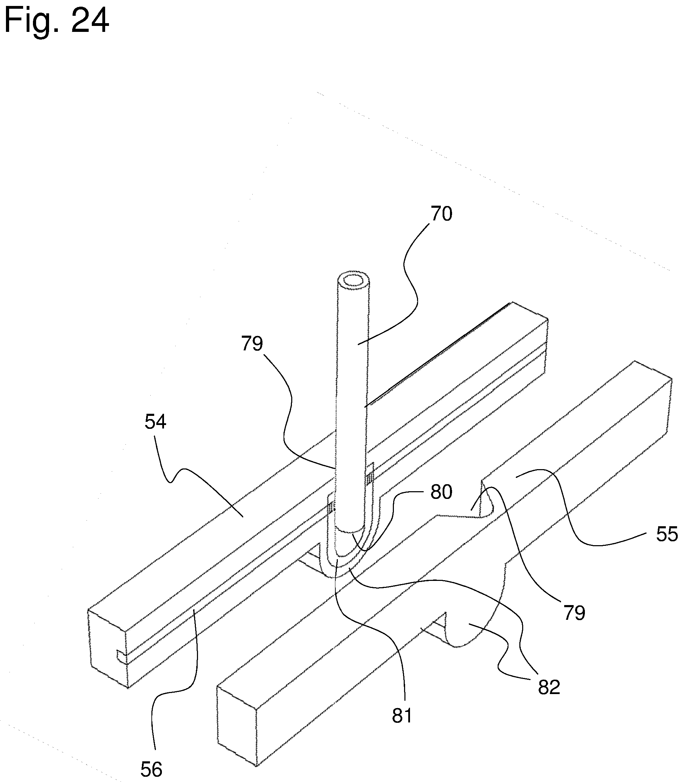

Am Schluss wird der Beutel an der Eintrittstelle des Luftrohrs 70 verschweisst, wie das anhand der Figur 24 erläutert wird, und dann wird das Luftrohr 70 nach oben aus dem Beutel 63 zurückgezogen. Damit ist der Beutel 63 mit seinem Inhalt und einem Luftanteil hermetisch dichtend verschweisst. In diesem Zustand ist der Beutel 63 oben wieder fest eingeklemmt und sicher gehalten, während er unten noch auf der Stützplatte 75 aufliegt. Die sich um das Luftrohr 70 schliessenden Vakuumleisten 54, 55 verschweissen die Beutelmündung mit ihren integrierten Schweissleisten 56.

Die Figur 24 zeigt eine Lösung dazu, wie die Vakuumleisten 54, 55 mit ihren Schweissbalken 56 gestaltet sind, damit zunächst der Beutel 63 längs der gerade verlaufenden Schweissbalkenabschnitte 56 verschweisst wird, während anschliessend noch über das Luftrohr 70 Luft in den Beutel 63 eingeblasen wird. Die Vakuumleisten 54, 55 weisen hier in der Mitte je eine Ausnehmung 79 auf, sodass sie sich satt um das eingeführte Luftrohr 70 schliessen. An dieser Ausnehmungsstelle sind sie nach unten in je einen gegen das Luftrohr 70 hin hohlen Fortsatz 82 auslaufend, in welchen sich die Mündung 80 des Luftrohrs 70 erstreckt. Längs des Randes dieses Fortsatzes erstrecken sich bogenförmige Schweissbalken 81. Wenn nun die Vakuumleisten 54, 55 noch zusammengefahren sind und das Luftrohr 70 in ihrer Mitte satt umschliessen, werden also zum Verschweissen des Beutels 63 zunächst die geraden Abschnitte des Schweissbalkens 56 beidseits des Luftrohrs 70 aktiviert und der Beutel wird längs dieser Schweissbalkenabschnitte verschweisst. Danach kann immer noch Luft über das Luftrohr 70 und seine Mündung 80 in den Beutel 63 gepumpt werden, bis er hinreichend ausbaucht. Erst dann werden auch die bogenförmigen Schweissbalken 81 aktiviert und verschweissen die Stelle des Beutels 63 rund um die Mündung 80 des Luftrohrs 70. Damit ist der Beutel hermetisch verschweisst und geschlossen und wird immer noch von den Vakuumleisten 54, 55 gehalten.

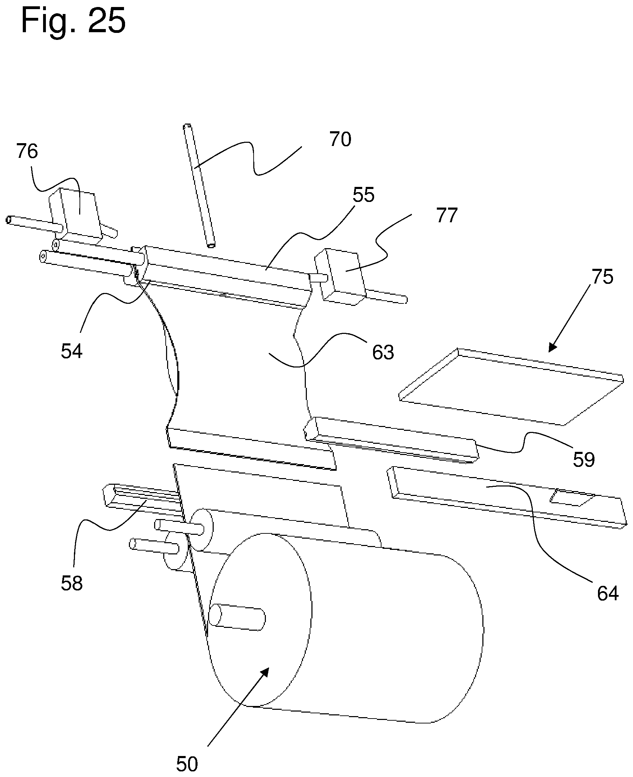

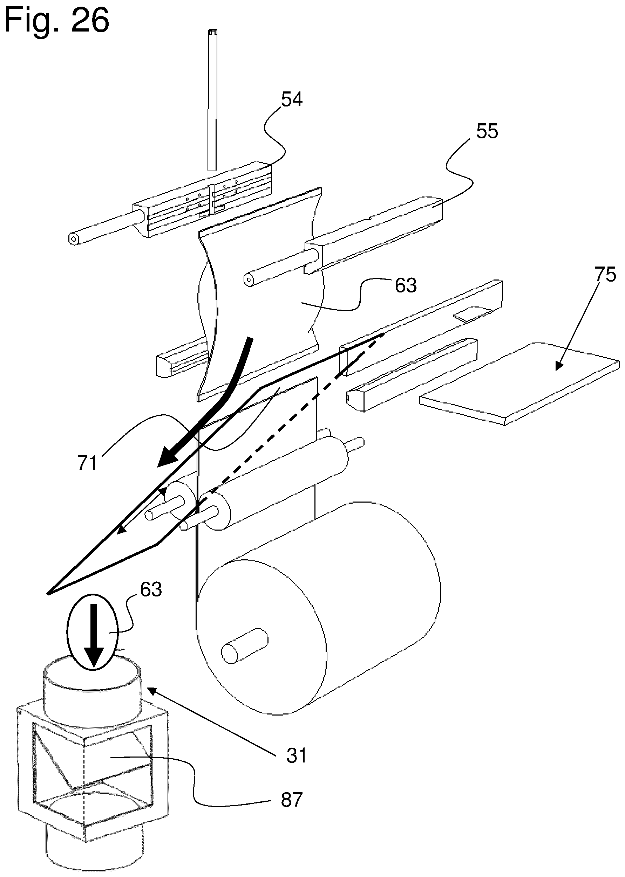

Es stellt sich die Situation wie in Figur 25 gezeigt ein, in welcher der gefüllte, hermetisch verschlossene Beutel 63 an den beiden Vakuumleisten 54, 55 frei hängt, nachdem die Stützplatte 75 seitlich weggefahren wurde. Im nächsten Schritt, wie in Figur 26 dargestellt, wird eine Gleitplatte 71 schiefwinklig unter den hängenden Beutel 63 gefahren und dann werden die Vakuumleisten 54, 55 nach Belüftung auseinandergefahren in die Position, in welcher sie in Figur 26 dargestellt sind, und damit lassen sie den Beutel 63 fallen, der dann auf dieser Gleitplatte 71 ins Abflussrohr 31 und hernach in die Kanalisation abgleitet, wie mit den Pfeilen angedeutet. Das Abflussrohr 31 ist hier mit einer federbelasteten Geruchsklappe 87 ausgerüstet, um die Gerüche aus der Kanalisation zu unterbinden, damit diese nicht in die ganze Einrichtung hinein gelangen.

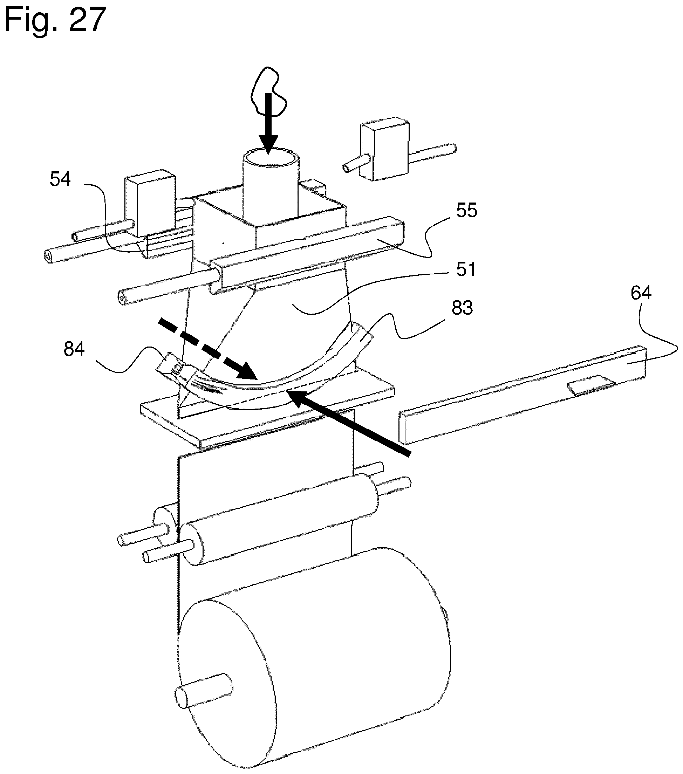

Eine besonders vorteilhafte Umsetzung der Beutelverpackung zur Erzeugung von oben und unten abgerundeten Beuteln ist in den folgenden Figuren gezeigt. Die Figur 27 zeigt die spezielle bogenförmige Gestaltung der unteren Schweissbalken 83, 84. Wenn ein Stück Schlauchbeutelmaterial von den Vakuumleisten 55, 54 hochgezogen ist, fahren diese beiden bogenförmigen Schweissbalken 83, 84 wie mit den Pfeilen eingezeichnet zusammen und klemmen das Schlauchmaterial 51 zwischen sich ein. Als Nächstes erfolgt eine Schweissung durch diese beiden Schweissbalken 83, 84, wodurch das Schlauchbeutelmaterial 51 unten bogenförmig dichtend verschweisst wird. Gleichzeitig wird das Material ausserhalb bzw. unterhalb der Schweissbalken 83, 84 durch spezielle bogenförmige Messerklingen an den Schweissbalken 83, 84 weggeschnitten und fällt nach unten in einen nicht eingezeichneten Sammelbehälter, aus dem diese Schnipsel von Zeit und Zeit entleert werden können.

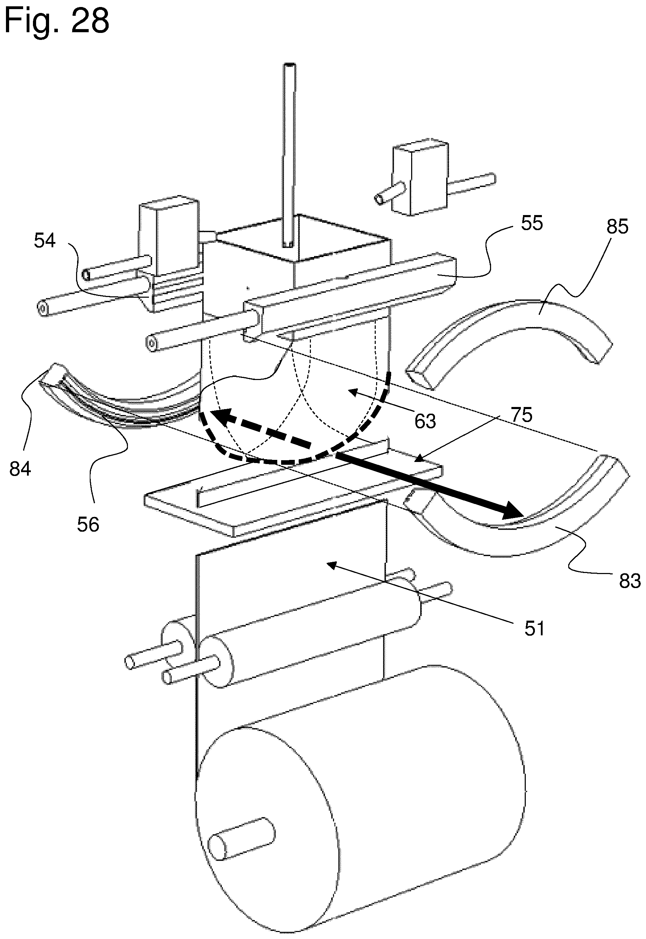

Die Figur 28 zeigt die Situation nach dem Auseinanderfahren der beiden bogenförmigen Schweissbalken 83, 84 mit ihren elektrisch erhitzbaren Schweissleisten 56. Hier erkennt man mit einer gestrichelten dicken Linie angezeigt die untere dichte Verschweissung, sodass nun bereits ein oben offener Beutel 63 entstanden ist, wie der von den oberen Vakuumleisten 55, 54 quadratförmig offengehalten wird, wie schon beschrieben wurde. In dieser Figur ist auch bereits einer der beiden bogenförmigen oberen Schweissbalken 85 eingezeichnet. Nachdem in diesem Zustand des Schlauchbeutels 63 die Feststoffe aus der Portioniervorrichtung fallengelassen werden und in den oben offengehaltenen Schlauchbeutel 63 fallen, muss er auch oben dichtend verschweisst werden.

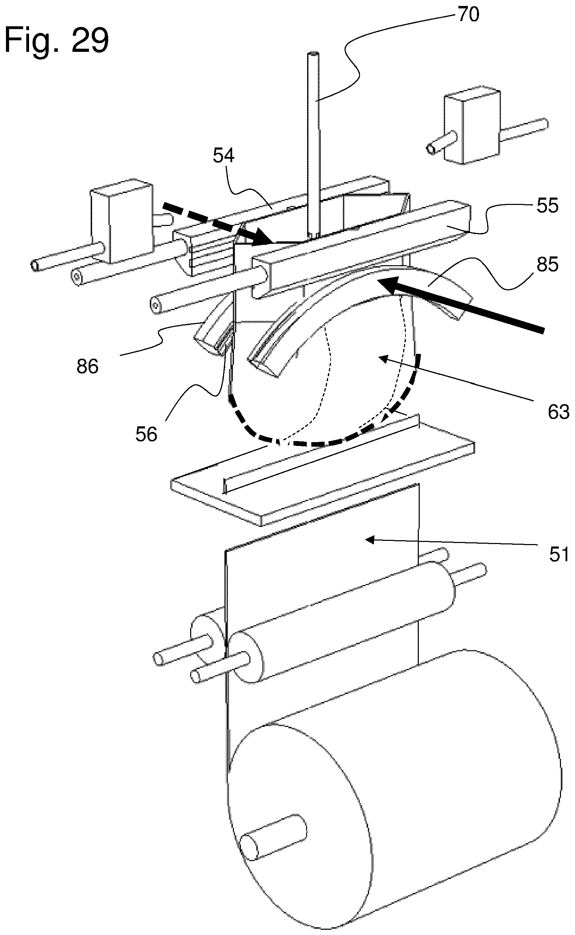

Das ist in Figur 29 gezeigt. Hierzu fahren die oberen Vakuumleisten 55, 54 zusammen und schliessen die obere Öffnung oder Mündung des Schlauchbeutels 63 um das noch in den Beutel ragende Luftrohr 70. Jetzt wird eine gesteuerte Menge Luft durch das Luftrohr 70 in den Beutel eingeblasen, sodass dieser eine gewünschte gewölbte, nach vorne und hinten ausbauchende Form annimmt. Die Luft dient dem Zweck, dass der fertige Schlauchbeutel in der Kanalisation hinreichenden Auftrieb erzeugt, damit er sich schwimmend oder wenigstens annähernd schwimmend mit hinreichendem Auftrieb in den Kanalisationsrohren mitschwemmen lässt. Nach dieser Befüllung mit Luft fahren die beiden oberen bogenförmigen Schweissbalken 85, 86 wie mit den Pfeilen eingezeichnet zusammen und klemmen den Schlauchbeutel 63 zwischen sich ein. Dann erfolgt die dichte Verschweissung des Schlauchmaterials und gleichzeitig werden die oberhalb der Schweissbalken 85, 86 überzähligen Folienstücke von den bogenförmigen Klingen von Messern, die sich oberhalb der eigentlichen elektrisch heizbaren Schweissleisten 56 längs derselben erstrecken, weggeschnitten bzw. weggestanzt. Die Folien-Schnipsel fallen in den schon erwähnten einen Sammelbehälter.

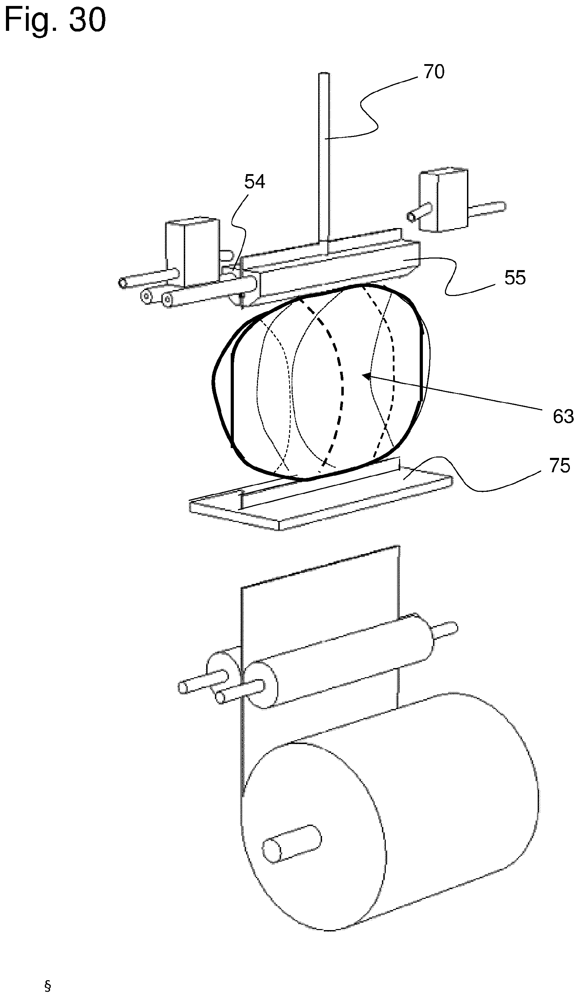

Nachdem die Schweissbalken 85, 86 vom fertigen Schlauchbeutel 63 weggefahren wurden, präsentiert sich die Situation so wie in Figur 30 dargestellt. Ein oben und unten bogenförmiger Schlauchbeutel 63, mit beidseits noch über ein stückweit geraden Rändern und gegen vorne und hinten ausgebaucht enthält eine definierte Portion Feststoffe zusammen mit einer ebenfalls definierten Menge Luft. Er hängt hier noch zwischen den Vakuumleisten 55, 54, die für die Verschweissung unten um die untere Mündung des Luftrohrs 70 besorgt waren.

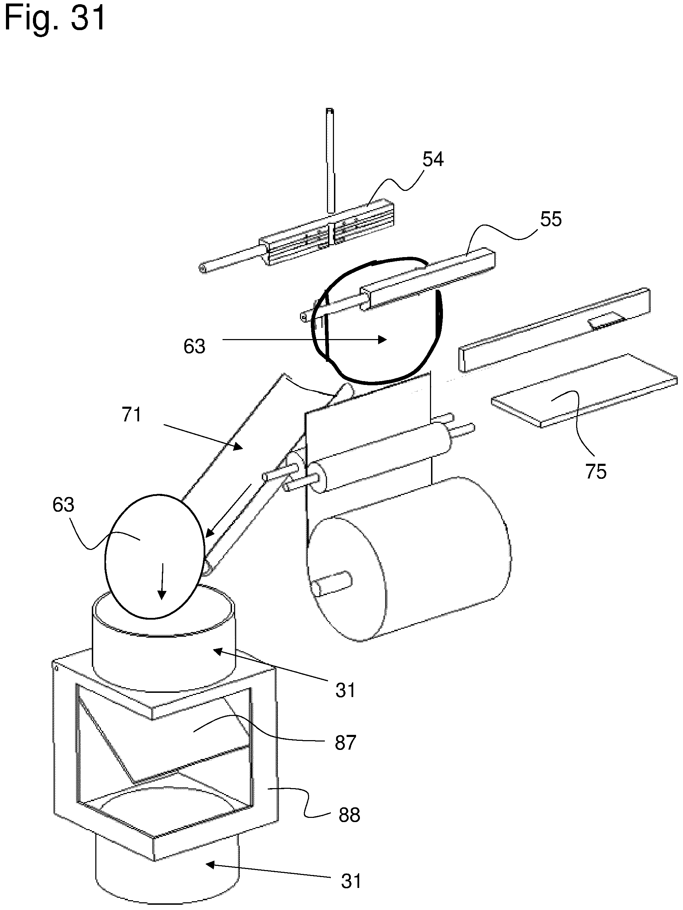

Die Figur 31 zeigt was nun folgt. Das Luftrohr 70 wird ein stückweit nach oben weggezogen. Nachdem von unten ein Gleitkännel bzw. eine Gleitrinne 71 oder eine Gleitplatte unter die Stützplatte 75 gefahren wurde, wird die Stützplatte 75 weggezogen. Der Schlauchbeutel 63 wird über diesen Gleitkännel bzw. diese Gleitrinne 71 oder diese Gleitplatte nach unten entlassen, indem die Vakuumleisten 55, 54 belüftet werden und dann auseinanderfahren in die hier gezeigte Position. Der Schlauchbeutel 63 gleitet daraufhin in ein Auffangrohr 31 und durch eine federbelastete Geruchsklappe 87, die in einem Gehäuse 88 schwenkbar angeordnet ist fällt er nach unten und schliesslich in die Kanalisation.

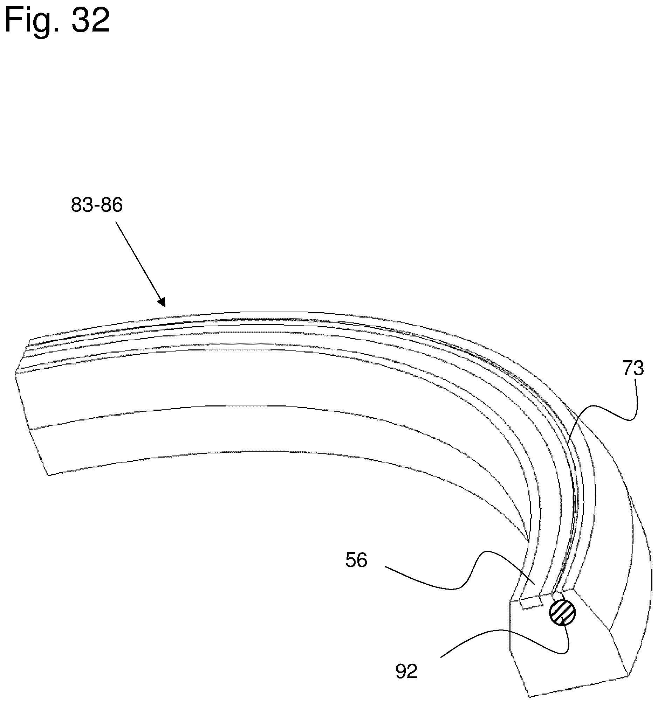

In Figur 32 ist die Gestaltung eines bogenförmigen Schweissbalken 83-86 dargestellt. Er weist einen bogenförmigen, elektrisch heizbaren Schweissbalken 56 auf, und in radialer Richtung ausserhalb desselben erstreckt sich parallel zu diesem elektrischen Schweissbalken 56 ein bogenförmiges Messer 73 mit einer scharfen Klinge. Diese bogenförmigen Messer 73 sind mit ihrer Rückseite im bogenförmigen Schweissbalken 83-86 vorteilhaft leicht elastisch nachgiebig angeordnet, etwa mittels einer darunter angeordneten Federplatte oder mittels eines gummielastischen Profils wie eingezeichnet.

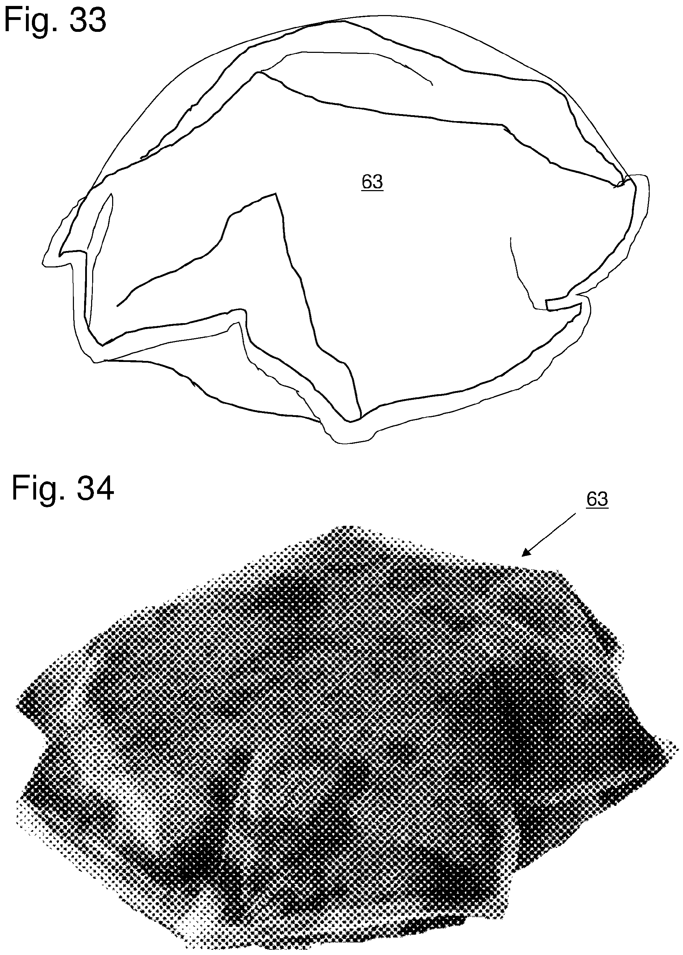

Schliesslich zeigt die Figur 33 den fertig verschweissten und ausgestanzten Beutel 63 im Endzustand. Der Beutel 63 ist bis auf zwei gerade Abschnitte bogenförmig, also fast kreisrund und oben wie auch unten ausbauchend. Solche Beutel 63gleiten oder schwimmen in der Kanalisation problemlos mit dem Abwasser mit und gelangen schliesslich unversehrt entweder in eine gesonderte Auffangstation zur sporadischen Entleerung, oder aber bis zu einer Kläranlage, wo sie im Klärbecken aufschwimmen und diesem für eine Weiterverarbeitung entnommen werden können.

Die Figur 34 zeigt einen fotografisch erfassten Schlauchbeutel 63 aus einer Prototypen-Anlage, mit welcher erfolgreich der technische Nachweis erbracht wurde, dass solche Schlauchbeutel 63 mit einem Anteil Feststoffen darin tatsächlich und ohne weiteres erzeugbar sind und in der Kanalisation problemlos mitgeschwemmt werden können, ohne dabei Schaden zu nehmen.

Insgesamt wird mit diesem Konzept viel weniger Frischwasser verbraucht und die Kläranlagen werden wesentlich entlastet, indem die Feststoffe eben gezielt vom Spülwasser getrennt werden und sich nicht innig mit diesem vermischen und hernach in der Kläranlage wieder aufwändig von diesem getrennt werden müssen.

Die Art und Weise der Entsorgung der Beutel 63 mit den darin enthaltenen Feststoffen kann hier im Prinzip offengelassen werden. Am besten werden sie wohl einer thermischen Verwertung zugeführt werden, wobei dann die entstehende Wärme als Prozesswärme nutzbar sein kann, oder zum Aufbereiten von Warmwasser in dezentralen Anlagen.

Im Sinne von Nachbemerkungen soll noch dieses erwähnt werden:
- Die gesamte Einrichtung und alle ihre Komponenten werden von einer SPS-Steuerung mit Rechner 18 automatisch überwacht und gesteuert, wobei diese Steuerung sämtliche beschriebenen Funktionen steuert.
- Die Einrichtung schliesst vorzugsweise eine Fernüberwachung mit ein, sodass irgendwelche Störungen sofort erkannt werden und durch einen optischen und akustischen Alarm angezeigt werden, oder eine solche Meldung über ein elektronisches Netz bzw. über das Internet auf die Smartphones der Hausbewohner und/oder einer Servicefirma übermittelt werden können. Zum Beispiel kann damit angezeigt werden, wenn die Rolle 50 mit dem Schlauchfolienmaterial 51 zur Neige geht und bald durch eine neue Rolle ersetzt werden muss. Wenn die Rolle aufgebraucht ist, wird die Schlauchbeutel-Verpackungseinheit 9 gestoppt, sodass also keine Feststoff-Kapselung mehr möglich ist, bis die neue Rolle 50 in Form einer Austauschkassette 10 (Figur 4) betriebsbereit installiert ist. Bis das vollzogen ist, stellt das Drehventil 21 auf Direkt-Ablass in die Kanalisation um und das WC 100 wird ganz konventionell benützt.
- Bei Haus- oder Siedlungsdepots 117 (Figur 3) wird deren Füllstand überwacht und ebenfalls an die Hausbewohner gemeldet, oder auch direkt an einen Entsorgungsdienstleister, welcher die Verantwortung dafür übernimmt, dass diese Depots 117 immer rechtzeitig entleert werden und immer eine hinreichende freie Kapazität aufweisen. Falls der Füllstand ein einstellbares Maximum erreicht, wird die Schlauchbeutel-Verpackungseinheit 9 blockiert, sodass keine weiteren mit Beutel-Entsorgungen möglich sind, sondern wiederum das Drehventil 21 auf Direkt-Ablass in die Kanalisation umgestellt wird und das WC ganz konventionell benützt werden kann.
- Weil die Einrichtung als komplette Baueinheit in einem Einbaumodul 1 untergebracht werden kann, kann sie im Idealfall so kompakt gestaltet werden, dass sie kostenoptional als Ersatzlösung auch an bestehende WCs angeschlossen werden. Im Unterschied zu den bereits verbauten herkömmlichen WCs muss die Ableitung der hermetisch verpackten Beutel63durch eine gesonderte Zuleitung und Einmündung in das bestehende Abflussrohr sichergestellt werden. Ansonsten passt das gesamte Einbaumodul in die standardisiert vorgesehenen Einbaubuchten für den Einbau der Spülkästen von Wand-WCs.
- Die Einrichtung bringt eine erhebliche Entlastung der öffentlichen Kläranlagen mit sich, was von der Abwasserwirtschaft sehr begrüsst wird.
- Je nach der Nach- bzw. Weiterbehandlung der in kissenförmigen Beuteln 63 gekapselten Exkremente bietet sich Möglichkeit einer sinnvollen Weiterverwendung der Exkremente.
- Das System bzw. Konzept mit dieser Einrichtung bietet die Möglichkeit, Standard WC-Schüsseln namhafter Hersteller zu verwenden.
- Der Einbau in Rahmenelemente (Duo Fix) mit den vorgegebenen Anschluss-Massen können für die Einbaumodule verwendet werden und auch für Standard WC-Schüsseln.
- Der wartungsfähige Teil des Systems, also das Einbaumodul 1, kann als Einheit (Einschub) getauscht werden.
- Der Betrieb dieser Einrichtung erbringt keine zusätzlichen Mehrbelastungen zum herkömmlichen Entsorgungssystem - im Gegenteil, er kann schliesslich insgesamt kostengünstiger gegenüber dem gegenwärtigen Entsorgungssystem sein.
- Die Einrichtung funktioniert geruchsfrei, da sie komplett hermetisch gekapselt und verschlossen ist.
- Die Einrichtung kann für einen Betreiber mit minimalem Aufwand und komfortabel betrieben werden. Es muss bloss von Zeit zu Zeit eine Austauschkassette mit einer neuen Rolle 50 von Schlauchmaterial 51 eingesetzt werden.
- Optional können im Innern des Feststoff-Abscheidetanks 3 und des oben angeordneten Feststofftanks 5 sowie auch im Innern der Schlauchbeutel-Verpackungseinheit 9 LEDs und Webcameras installiert werden, sodass die Abläufe in den einzelnen Komponenten von aussen bedarfsweise auf einem Bildschirm bzw. Bedienungspanel 20 nachverfolgbar sind, und allfällige Störungen können damit inspiziert und analysiert werden, ohne dass irgend etwas geöffnet werden muss.
- Filmausschnitte können bedarfsweise an eine Servicestelle versandt werden, damit diese sofort Bescheid weiss, was allenfalls zu tun ist.
- Die Beutel 63 wie optional auch der angesammelte Urin werden vorteilhaft in ein eigens verlegtes Röhrensystem im Gebäude abgelassen und weggeführt.
- Die vorliegende Einrichtung lässt sich als Modulkasten mit handelsüblichen Abmessungen realisieren, wie die gegenwärtigen Leichtbau-Systeme von z.B. Geberit (Duofix & GIS) oder Firma Nussbaum (Optivis-Tec) oder Grohe Deutschland. Die Standardbreite für den Wandeinbau ist dabei 500 mm oder 750 mm, die Höhe ist variabel und kann zum Beispiel 1120 mm betragen, und die Tiefe ca. 280 mm. Diese Standardabmessungen sind bei allen anderen Anbietern gleich. Damit ist es möglich ist, mit einem entsprechenden Modul für diese vorliegende Einrichtung jeden möglichen WC-Typ anzuschliessen und zu betreiben.

### Ziffernverzeichnis

- 1: Einbau-Modul für Feststoffabscheidung und Schlauchbeutelverpackung
- 2: Anschlussrohr für Ableitungsrohr 107 von WC Schüssel 100
- 3: Feststoff-Abscheidetank
- 4: Steigrohr
- 5: Feststofftank oben im Modul
- 6: Portioniervorrichtung
- 7: Ventil
- 8: Fallrohr
- 9: Schlauchbeutel-Verpackungseinheit
- 10: Wechselkassette in 9
- 11: Abwasserrohr im Modul
- 12: Spülkasten im Modul
- 13: Grauwassertank im Modoul
- 14: Braunwassertank in Modul
- 15: Querstreben an Stahlrahmen von 1
- 16: Anschluss für Spülwasser in 1
- 17: Stromversorgung von 1
- 18: elektronische Rechnereinheit/SPS-Steuerung in 1
- 19: Ultraviolett-Desinfektionsanlage in 1
- 20: Bedienungspanel in 1
- 21: Drehventil
- 22: Rohr direkt ins Fallrohr 24
- 23: Rohr in den Feststoff-Abscheidetank 3
- 24: Fallrohr in die Kanalisation (Figur 5)
- 25: gesonderte Ableitung für Urin (Figur 6)
- 26: Rührwerk mit Schaufelrad als Zerhaker
- 27: Tankboden
- 28: Feststoff-Pumpe
- 29: Rückhaltesieb
- 30: Ventil im Steigrohr 4
- 31: Abgangsrohr in die Kanalisation
- 32: Förderpumpe für Braunwasser in die UV-Desinfektionseinheit 19
- 33: Entlüftungsleitung für den Feststofftank 5
- 34: Notleitung aus Portioniervorrichtung 6
- 35: motorbetriebenes Ventil in der Notleitung 34 zum Rohr 31
- 36: Rotorgehäuse
- 37: Entrittsöffnung in 36
- 38: Schwenkhebel im Rotorgehäuse
- 39: Durchgangskanal
- 40: Rotorgehäuseboden
- 41: Austrittsöffnung
- 42: elektrischer Doppelantrieb für zwei Koaxialachsen
- 43: Rotor
- 44: Achse für den Rotor 43
- 45: Achse für den Schwenkhebel 38
- 46: Frischwasserleitung in den Grauwassertank
- 47: Achse zum Rotor 43
- 48: Achse zum Schwenkhebel 38
- 49: Stahlrahmen des Moduls 1
- 50: Endlos-Rolle Schlauch
- 51: Schlauch
- 52, 53: Pressrollen
- 54, 55: Vakuumleisten
- 56: Heiz-/Schweissleiste an 54, 55
- 57: Heiz-/Schweissleiste an 58, 59
- 58, 59: untere Schweissbalken
- 60: Endbereich des Schlauchmaterials auf einer Seite
- 61: Endbereich des Schlauchmaterials auf anderer Seite
- 62: quadratische Öffnung, Schlauchmündung
- 63: Schlauchbeutel
- 64: bandförmiger verschweisster Bereich im Schlauch
- 65: Schneidevorrichtung
- 66: Trennmesser
- 67: Schnittkanten des Trennmessers 66
- 68: Zufuhrrohr für Feststoffe in den Schlauchbeutel 63
- 69: Feststoff-Portion
- 70: Luftrohr
- 71: Gleitplatte, Gleitkännel, Gleitrinne
- 72: Schnittstelle rund um kreisrunden kissenförmigen Beutel
- 73: Messer an halbkreisförmigem Schweissbalken
- 74: Eckbereiche des Beutels vor dem Wegschneiden
- 75: Stützplatte
- 76: Vakuumpumpe für Vakuumleiste 54
- 77: Vakuumpumpe für Vakuumleiste 55
- 78: Überlaufleitung aus Feststoff-Abscheidetank 3 in den Braunwassertank 14
- 79: Ausnehmung in Saugleiste 55 für Luftrohr 70
- 80: Mündung des Luftrohrs 70
- 81: bogenförmiger Schweiss um die Mündung 80 des Luftrohrs 70
- 82: Fortsatz an den Schweissbalken 55, 54 für Umfassung Mündung 80 Luftrohr 70
- 83: unterer vorderer bogenförmiger Schweissbalken
- 84: unterer hinterer bogenförmiger Schweissbalken
- 85: obere vorderer bogenförmiger Schweissbalken
- 86: obere hintere bogenförmiger Schweissbalken
- 87: Geruchsklappe, federbelastet
- 88: Gehäuse für Geruchsklappe
- 89: Feststoff-Sensoren
- 90: Reinigungsventil
- 91: Überlaufventil
- 92: gummielastisches Profil unter dem Messer 73
- 93: Ventil für Grauwassertank
- 94: Ventil zu Frischwassertank
- 95: Nachspülventil Frischwassertank
- 96: Entlüftungsleitung
- 97: Ventil Speisung Frischwassertank
- 98: Ventil Speisung Grauwassertank 13
- 99: Zuleitung von der Desinfektions-Einrichtung in den Grauwassertank
- 100: WC Schüssel
- 101: podestförmiger Boden in WC 100
- 102: abfallende Nase des Bodens 101
- 103: Auffangkammer in WC 100
- 104: kleiner Siphon für Urin
- 105: klein dimensioniertes Rohr für Urin
- 106: Siphonwasser
- 107: Ablaufrohr in die Kanalisation
- 108: grosser Siphon für Abgang mit Feststoffen
- 109: Abwasserkanal zur Kläranlage
- 110: Ablaufrohr für Urin
- 111: grösseres Ablaufrohr für Abgang mit Feststoffen
- 112: Ablaufrohr Badewanne
- 113: Badewanne
- 114: Lavabo
- 115: Waschmaschine
- 117: Sammelbehälter
- 119: Kanalisation
- 120: Einlassrohr für Lift
- 121: Lift-Korb
- 122: Schlitzen am Lift-Korb
- 123: Bodenplatte ausschwenkbar
- 124: Gewindestangen
- 125: Führungsgewinde-Muttern
- 126: Antriebs-Motor
- 127: Zahnriemen
- 128: Führungsprofile
- 129: Führungsrippen am Lift-Korb 121
- 130: Schwenkachse des Lift-Korbes
- 131: Ausschüttgosse

- 200: Einbaurahmen
- 201: Spülkasten
- 202: Füsse des Einbaurahmens
- 203: Gewindebüchsen
- 204: Anschluss-Stutzen für WC-Ablauf
- 205: Anschluss-Rohr für WC-Spülung
- 207: elektrische Anschlüsse
- 209: Tastenfeld
- 210: Display oberhalb des WCs

## Patentansprüche

1. Verfahren zur Abscheidung der Feststoffe aus einem Wasser-Klosett (100) nach dessen Siphon (108), wobei die Feststoffe zusammen mit einem Luftanteil in vereinzelte Beutel (63) eines endlos zugeführten Schlauches (51) verpackt und die schwimmfähigen Beutel (63) hermetisch verschweisst einzeln in die Kanalisation (119) entlassen werden.

2. Verfahren gemäss Anspruch 1, wobei eine Einrichtung verwendet wird, welche ein Lift-System mit einem Lift-Korb (121) mit Schlitzen (122) in seinen Seitenwänden und einem gegen Federkraft abklappbaren Boden (123) einschliesst, und welcher Lift-Korb (121) motorisch und an Profilen (128) geführt hochförderbar ist und in der obersten Position seitlich um eine Querachse (130) ausschwenkbar ist und sein Boden (123) hernach ausklappbar ist, zum Auskippen der enthaltenen Feststoffe durch eine Ausschüttgosse (131) in die darunterliegende Portionier-Einrichtung, wobei
a) die Feststoffe in einen Feststoff-Abscheidetank (3) geleitet werden, aus dem sie portioniert von oben in den Lift-Korb (121) des Lift-Systems fallen,
b) die Feststoffe im Lift-Korb (121) des Lift-Systems hochgefördert werden und gleichzeitig durch den Lift-Korb (121) abtropfen,
c) die Feststoffe aus dem Lift-Korb (121) in eine Portioniervorrichtung (6) gelangen, aus welcher die Feststoffe in Portionen (69) durch ein Ventil (7) entlassen und in die oben offen gehaltene Mündung (62) eines Schlauchbeutels (63) fallengelassen werden, wobei der Schlauchbeutel (63) unten durch eine Querschweissung (64) von einem von unten endlos zugeführten Schlauch (51) einer Rolle (50) erzeugt wird und von Vakuumleisten (54, 55) im Mündungsbereich festgehalten wird und unterhalb der Querschweissung (64) vom Endlos-Schlauch (51) weggeschnitten wird und hernach eine Stützplatte (75) unter den Beutel (63) gefahren wird und der Beutel (63) auf dieselbe (75) abgestellt wird,
d) der Beutel (63) nach Befüllung und Einblasung von Luft durch Verschweissen der Mündung (62) verschlossen wird,
e) der Beutel (63) durch Entlasten und Auseinanderfahren der Vakuumleisten (55, 54) auf einen Gleitkännel bzw. eine Gleitrinne (71) oder eine Gleitplatte fallengelassen wird, wonach er über ein Ablaufrohr (31) in die Kanalisation entlassen wird.

3. Verfahren gemäss Anspruch 2, wobei
a) die Feststoffe in einen Feststoff-Abscheidetank (3) geleitet werden, in welchem sie zu einem dickflüssigen Brei zerhakt sich auf seinen Boden (27) absenken,
b) der dickflüssige Brei mittels einer Feststoff-Pumpe (28) in einen hoch gelegenen Feststofftank (5) gefördert wird,
c) der dickflüssige Brei mittels einer Portioniervorrichtung (6) in Portionen (69) durch ein Ventil (7) entlassen in die oben offen gehaltene Mündung (62) eines Schlauchbeutels (63) fallengelassen werden, wobei der Schlauchbeutel (63) unten durch eine Querschweissung (64) von einem von unten endlos zugeführten Schlauch (51) einer Rolle (50) erzeugt wird und von Vakkumleisten (54, 55) im Mündungsbereich festgehalten wird und unterhalb der Querschweissung (64) vom Endlos-Schlauch (51) weggeschnitten wird und hernach eine Stützplatte(75) unter den Beutel (63) gefahren wird und der Beutel (63) auf dieselbe (75) abgestellt wird,
d) der Beutel (63) nach Befüllung und Einblasung von Luft durch Verschweissen der Mündung (62) verschlossen wird,
e) der Beutel (63) durch Entlasten und Auseinanderfahren der Vakuumleisten (55, 54) auf einen Gleitkännel bzw. eine Gleitrinne (71) oder Gleitplatte fallengelassen wird, wonach er über ein Ablaufrohr (31) in die Kanalisation entlassen wird.

4. Verfahren gemäss einem der Ansprüche 2 oder 3, wobei die festen Exkremente und der Urin, wenn er nicht vorher separat abgeleitet wird, nach einer Spülauslösung des oben angeordneten Grauwassertanks (13) aus der WC-Schüssel (100) via Siphon und Drehventil (21) in den Feststoffabscheidetank (3) gelangen, die Feststoffe vermischt mit Grauwasser über eine Steigrohr (4) nach oben in den einen Feststofftank (5) gepumpt werden, das überschüssige Grauwasser über ein Überlaufrohr 78 in den Braunwassertank (14) zurückfliesst, der Inhalt des Braunwassertanks auf 2 Liter abgesenkt wird, eine Nach-Spülung aus dem Frischwasser-Tank (12) mit etwa 2 Litern erfolgt, zur Reinigungsspülung des WC-Siphon und dieses relativ saubere Wasser in den Braunwassertank (14) zurückfliesst, und nach Abschluss dieses zweiten Füllvorgangs das Braunwasser in eine oben angeordnete UV Desinfektionsanlage (19) befördert wird, und der Braunwassertank bedarfsweise mit Frischwasser endgefüllt wird.

5. Verfahren gemäss einem der Ansprüche 2 oder 4, wobei
a) im Fall einer reinen Urinabgabe des Benützers mittels Betätigung einer kleineren Taste von zwei Betätigungstasten die Spülung durch den Frischwassertank (12) ausgelöst wird und ein Drehventil (21) auf Position gestellt wird, sodass der Urin konventionell in das Abgangsrohr (31) und damit in die Kanalisation gelangt,
b) bei einer Fehlmanipulation mit einer grösseren Taste dieser zwei Betätigungstasten, nachdem keine Feststoffe abgegeben wurden, eine 4 Liter-Grauwasserspülung ausgelöst wird, ohne Frischwasserspülung, und das unverbrauchte Grauwasser in den Braunwassertank (14) geleitet wird, wonach das Grauwasser wieder in den Grauwassertank (13) hochgepumpt wird,
c) bei einer Überlastung der Einrichtung diese auf einen Notbetrieb umschaltet, indem ein Drehventil (21) auf eine Stellung (2) schaltet, sodass eine Spülung aus dem Frischwasserspülkasten (12) erfolgt und alles, das heisst der Urin und die Feststoffe direkt in die Kanalisation geleitet werden, und hernach die Einrichtung auf Normalbetrieb umschaltet.

6. Einrichtung zur Abscheidung von Feststoffen, mit einem Wasser-Klosett (100) mit einer Schüssel, welche vorne einen zusätzlichen podestförmigen Boden (101) aufweist, der sich von vorne gegen etwa die Mitte der Schüssel (100) hin erstreckt und dort in eine abfallende Abtropfnase (102) ausläuft, sodass Urin auf diesem Boden (101) auffangbar ist über die Abtropfnase (102) in eine unten anschliessende Auffangkammer (103) und über einen kleinen Siphon (104) des Wasser-Klosetts (100) und ein gesondertes, klein dimensioniertes Rohr (105) in einen gesonderten Behälter der Einrichtung ableitbar und dort sammelbar ist, und wobei feste Exkremente hinter der Abtropfnase (102) in das Siphonwasser (106) eines grossen Siphons (108) des Wasser-Klosetts (100) fallen und hernach in ein Ableitungsrohr (107), das hinten aus dem Siphon (108) aus der Klosettschüssel (100) führt, wobei die Einrichtung im Anschluss an den grossen Siphon (108) mindestens folgende technischen Komponenten zum Behandeln des Siphon-Abgangs in einem innerhalb der Einrichtung geschlossenen und damit geruchtsdichten System einschliesst:
• Einen Feststoff-Abscheidetank (3) für das Auffangen der Feststoffe,
• Eine Feststoff-Pumpe (28) zum Aufwärtsbefördern der abgeschiedenen Feststoffe in einem Steigrohr (4) in einen hoch gelagerten Feststofftank (5) oder ein Lift-System mit einem Lift-Korb (121) zum Hochfördern und gleichzeitigen Abtropfen der Feststoffe und zum Auskippen,
• Eine Portioniervorrichtung (6) mit Ventil (7) zum Fallenlassen von aus der Feststoffpumpe (28) oder dem Lift-Korb (121) empfangenen Feststoff-Portionen (69) in eine darunter angeordnete Schlauchbeutel-Verpackungseinheit (9),
• Eine Schlauchbeutel-Verpackungseinheit (9) zur Erzeugung von hermetisch verschweissten und hernach vereinzelten Beuteln (63) mit Feststoffen und einem Luftanteil aus einem innerhalb des Systems endlos zugeführten Schlauch (51), zur Abgabe in die Kanalisation.

7. Einrichtung nach Anspruch 6, wobei sie innerhalb des geschlossenen Systems folgende Komponenten einschliesst: ein Lift-System mit einem Fang-Korb (121) mit Schlitzen (122) oder Löchern in seinen Seitenwänden und einen gegen Federkraft abklappbaren Boden (123), welcher Fang-Korb (121) motorisch und an in der Einrichtung angeordneten Profilen (128) geführt hochförderbar ist und in der obersten Position seitlich um eine Querachse (130) ausschwenkbar ist, wobei sein Boden (123) hernach motorisch ausklappbar ist, zum Auskippen der enthaltenen Feststoffe durch eine Ausschüttgosse (131) der Einrichtung in die zugehörige darunter liegende Portionier-Einrichtung.

8. Einrichtung nach Anspruch 6, wobei sie über dem Wasser-Klosett (100) und innerhalb des geschlossenen Systems folgende Komponenten aufweist: einen Frischwassertank (12) und einen Grauwassertank (13) für die aufeinanderfolgende Spülung des Wasser-Klosetts (100) zunächst mit Grauwasser und hernach mit Frischwasser, einen Braunwassertank (14) unterhalb des Wasser-Klosetts (100), der von einem Überlaufrohr (78) des Feststoff-Abscheidetanks (3) gespeist ist, und weiter eine Pumpe (32) zur Förderung des Braunwassers in eine in diesem geschlossenen System angeordnete UV-Desinfektionseinheit (19) oberhalb des Grauwassertanks (13), der mit einer Frischwasser-Zuleitung (99) speisbar ist.

9. Einrichtung nach einem der Ansprüche 6 bis 7, wobei der FeststoffAbscheidetank (3) für das Auffangen der Feststoffe ein Rührwerk (26) mit Schaufelrad zum Zerhacken der Feststoffe in einen dickflüssigen Brei enthält, sowie einen unten konisch zulaufenden Boden (27) aufweist, zum Ansaugen des Feststoffbreis durch die Feststoff-Pumpe (28), und das Steigrohr (4) für das Hochfördern der Feststoffe ein elektrisch betätigbares Absperrventil (30) aufweist, zur Verhinderung eines Rücklaufs bei stillstehender Feststoff-Pumpe (28).

10. Einrichtung nach einem der Ansprüche 6 bis 8, wobei die Portioniervorrichtung(6) ein Rotorgehäuse (36) mit oben einer Eintritts- (37) und unten einer Austrittsöffnung aufweist, mit darin einem rotierbaren Schwenkhebel (38), und ein Rotor (43) im Rotorgehäuse (36) einen Durchgangskanal (39) aufweist, und die Portioniervorrichtung (6) einen elektrischen Doppelantrieb (42) mit zwei koaxialen Achsen (47, 48) aufweist, zur Drehung des Rotors (43) und des Schwenkhebels (38) in beiden Umlaufrichtungen.

11. Einrichtung nach einem der Ansprüche 6 bis 10, wobei die Schlauchbeutel-Verpackungseinheit (9) folgende Komponenten einschliesst: einen ab einer Rolle (50) endlos zuführbaren Schlauch (51), zwei aufeinander abrollende Pressrollen (52, 53) zum von unten nach oben Durchrollen des endlos zuführbaren Schlauches (51), mit oben zwei gegeneinander zu und weg bewegbaren Vakuumleisten (54, 55) mit je einer Schweissleiste (56), wobei mit diesen Vakuumleisten (54,55) das obere Schlauchende durch Ansaugen ergreifbar und hochziehbar ist, und hernach durch Auseinanderfahren der Vakuumleisten (54, 55) zu einer rechteckigen Mündung (62) aufschliessbar ist, weiter zwei tiefer liegende Schweissbalken (58, 59) zum geraden oder bogenförmigen Querverschweissen des Schlauches (51) unterhalb einer Beutellänge von der oberen Mündung (62) an gemessen, sowie einer Schneidevorrichtung (65) zum Abschneiden des Schlauches (51) unterhalb der erzeugten geraden oder bogenförmigen Querverschweissung (64).

12. Einrichtung nach einem der Ansprüche 6 bis 11, wobei sie zwei bogenförmige Schweissbalkenpaare (83, 84; 85, 86) aufweist, nämlich ein unteres Paar (83, 84) mit Bogeninnenseite nach oben gerichtet, und eine oberes bogenförmiges Schweissbalkenpaar (85, 86) mit Bogeninnenseite nach unten gerichtet, zur Erzeugung einer zunächst unteren bogenförmigen Verschweissung des Beutelmaterials (51) und nach Befüllung zur oberen bogenförmigen Verschweissung des Beutelmaterials und damit Erzeugung eines annähernd runden, nach vorne und hinten ausgebauchenden Beutels (63), und wobei die oberen und unteren bogenförmigen Schweissbalken-Paare (83, 84; 85, 86) mit radial ausserhalb der Schweissbalken verlaufenden Messern (73) ausgerüstet sind, zur Abtrennung der Folienreste ausserhalb des erzeugten annähernd runden Beutels (63).

13. Einrichtung nach Anspruch 11, wobei die Schlauchbeutel-Verpackungseinheit (9) ein in die Beutelmündung absenkbares Luftrohr (70) einschliesst, zum Einblasen von Luft in den mit Feststoffportionen angefüllten Beutel (63), wobei durch Zusammenfahren der Vakuumleisten (54, 55) die Beutelmündung (62) um das Luftrohr (70) verschliessbar und von ihren Schweissbalken (56) verschweissbar ist, und nach oben Herausziehen des Luftrohrs (70) auch die dortige Stelle in der Mündung (62) verschweissbar ist, sodass ein hermetisch verschlossener Luft und Feststoffportionen (69) enthaltender Beutel (63) erzeugbar ist.

14. Einrichtung nach einem der Ansprüche 6 bis 13, wobei sie einen Gleitkännel bzw. eine Gleitrinne (71) oder Gleitplatte als schiefe Ebene für die hermetisch verschweissten Beutel (63) einschliesst, sowie eine motorisch in den Bereich unterhalb des Beutels (63) ein- und ausfahrbare Stützplatte (75), sodass nach Ausfahren bzw. Wegziehen einer Stützplatte (75) und Entlastung der Vakuumleisten (54, 55) der Beutel (63) zum Abgleiten auf der Gleitplatte (71) in ein Ablaufrohr (31) mit federbelasteten Geruchsklappe (87) und nach Passieren derselben in die Kanalisation freigebbar ist.

15. Einrichtung nach einem der Ansprüche 6 bis 14, wobei sie nach ihrem Wasser-Klosett (100) und nach dessen grossen Syphon (108) ein elektrisch betätigbares 120° Drehventil (21) aufweist, welches eine Weiche mit drei EinstellPositionen bildet, mit einer ersten Position für einen Normalbetrieb, zur Weiterleitung des ankommenden Spülgut aus Wasser, allenfalls Urin, wenn dieser nicht abgesondert aufgefangen wird, und Feststoffen wie Exkrementen und WC-Papier in den anschliessenden Feststoff-Abscheidetank (3), mit einer zweiten Position für einen Störungsbetrieb zum direkten konventionellen Ableiten des Spülguts in die Kanalisation ableitet und einer dritten Position für einen Reinigungsbetrieb zur Rückspülung des anschliessenden Feststoff-Abscheidetanks (3), wobei sowohl dieses Drehventil (21) wie auch der Feststoff-Abscheidetank (3) durch innen geeignet angeordnete Reinigungsdüsen durchspülbar sind.

16. Einrichtung nach einem der Ansprüche 6 bis 15, wobei sie eine elektronische Steuerungseinheit SPS (18) einschliesst, zur Verarbeitung von elektrischen Signalen von allen Komponenten und zur Ansteuerung derselben, und dass im Innern der Einrichtung Sprühdüsen für die Abreinigung schmutzgefährdeter Stellen und Webcams installiert sind, zur Erfassung des Zustandes der Einrichtung und der Abläufe im Innern in Echtzeit.

17. Einrichtung nach Anspruch 15, wobei sie eine elektronische Steuerungseinheit SPS (18) einschliesst, zur Verarbeitung von elektrischen Signalen von folgenden Komponenten und zur deren Ansteuerung zur elektronischen Steuerung:
a) das motorisch drehbare 120° Drehventil (21),
b) das Rührwerk (26) im Feststoff-Abscheidetank (3),
c) die Feststoffpumpe (28) zum Hochfördern der Feststoffe oder das Lift-System mit dem hochförderbaren und oben auskippbaren Lift-Korb (121),
d) das Absperrventil (30) in der Steigleitung (4),
e) die Portioniervorrichtung (6),
f) das Ventil (7) unterhalb der Portioniervorrichtung (6),
g) die motorisch horizontal und vertikal verschiebbaren Vakuumleisten (54, 55; 83, 84) für die Mündung (62) der Schlauchbeutel (63), ihre Vakuumleistung und ihre integrierten Schweissleisten (56),
h) die motorisch horizontal und seitlich verschiebbaren Vakuumleisten (58, 59; 83, 84) zur Querschweissung oder bogenförmigen Verschweissung der Beutel (63) längs ihres zu erstellenden Bodens,
i) die motorisch unter den jeweils hängenden Beutel (63) einfahrbare Stützplatte (75),
j) die Gleitplatte (71) oder der Gleitkännel bzw. die Gleitrinne oder Gleitplatte als schiefe Ebene, unter einen gefüllten Beutel (63) einfahrbar,
k) die Braunwasserpumpe (32),
l) die UV-Desinfektionseinheit (19),
m) sämtliche Leitungsventile,
n) sämtliche Sprühdüsen zur sporadischen inneren Abreinigung der Einrichtung,
o) sämtliche Überwachungselemente wie Kameras, Sensoren etc.

18. Einrichtung nach einem der Ansprüche 6 bis 17, wobei all ihre Komponenten als komplettes Einbaumodul (1) in einem Stahlrahmen (49) der Einrichtung verbaut sind und dieser Stahlrahmen (49) in die Standard-Einbaubucht eines Wand-WCs einpasst, das heisst maximal 750 mm in der Breite, 280 mm in der Tiefe und 1500 mm bis 2200 mm in der Höhe misst.

## Claims

1. Method for separating solids from a water closet (100) after its siphon (108), wherein the solids are packed together with a proportion of air into individual bags (63) of a continuously fed hose (51) and the buoyant bags (63) are hermetically sealed and individually discharged into the sewer system (119).

2. Method according to claim 1, wherein a device is used which includes a lift system with a lift basket (121) with slots (122) in its side walls and a bottom (123) that can be folded down against spring force, and which lift basket (121) can be raised by motor and guided on profiles (128) and can be swung out laterally about a transverse axis (130) in the uppermost position, whereupon its bottom (123) can be folded out to tip the solids contained therein through a discharge chute (131) into the portioning device located below,
*whereby*
a) the solids are fed into a solids separation tank (3), from which they fall in portions from above into the lift basket (121) of the lift system,
b) the solids are transported upwards in the lift basket (121) of the lift system and simultaneously drip through the lift basket (121),
c) the solids from the lift basket (121) enter a portioning device (6), from which the solids are released in portions (69) through a valve (7) and dropped into the opening (62) of a tubular bag (63) which is kept open at the top, wherein the tubular bag (63) is produced at the bottom by a transverse weld (64) from a tube (51) fed endlessly from below from a roll (50) and is held in the opening area by vacuum strips (54, 55) in the mouth area and cut away from the endless tube (51) below the transverse weld (64), whereupon a support plate (75) is moved under the bag (63) and the bag (63) is placed on it (75),
d) the bag (63) is sealed after filling and blowing in air by welding the opening (62),
e) the bag (63) is dropped onto a sliding chute or slide (71) or a sliding plate by releasing and moving apart the vacuum bars (55, 54), after which it is discharged into the sewer system via a drain pipe (31).

3. Method according to claim 2, wherein
a) the solids are fed into a solids separation tank (3), in which they are chopped up into a thick slurry and sink to the bottom (27),
b) the thick slurry is conveyed by means of a solids pump (28) into an elevated solids tank (5),
c) the viscous slurry is divided into portions (69) by means of a portioning device (6) and discharged through a valve (7) into the open top (62) of a tubular bag (63), the tubular bag (63) being produced at the bottom by a transverse weld (64) from a tube (51) fed endlessly from below from a roll (50) and held in the mouth area by vacuum strips (54, 55) in the mouth area and cut away from the endless tube (51) below the transverse weld (64), whereupon a support plate (75) is moved under the bag (63) and the bag (63) is placed on it (75),
d) after filling and blowing in air, the bag (63) is sealed by welding the opening (62),
e) the bag (63) is dropped onto a sliding chute or sliding channel (71) or sliding plate by releasing and moving apart the vacuum strips (55, 54), after which it is discharged into the sewer system via a drain pipe (31).

4. Method according to one of claims 2 or 3, wherein the solid excrement and the urine, if not previously drained separately, enter the solid waste separation tank (3) from the toilet bowl (100) via a siphon and rotary valve (21) after flushing the grey water tank (13) located above, the solids mixed with grey water are pumped upwards via a riser pipe (4) into a solids tank (5), the excess grey water flows back into the brown water tank (14) via an overflow pipe 78, the contents of the brown water tank are reduced to 2 litres, a follow-up flush from the fresh water tank (12) with approximately 2 litres is carried out to flush the toilet siphon, and this relatively clean water flows back into the brown water tank (14), and after completion of this second filling process, the brown water is transported to a UV disinfection system (19) located above, and the brown water tank is filled with fresh water as required.

5. Method according to one of claims 2 or 4, wherein
a) in the case of pure urine discharge by the user, the flush is triggered by pressing a smaller of two buttons, and a rotary valve (21) is set to a position so that the urine flows conventionally into the outlet pipe (31) and thus into the sewer system,
b) in the event of incorrect operation of a larger button of these two buttons, after no solids have been discharged, a 4-litre grey water flush is triggered without fresh water flushing, and the unused grey water is fed into the brown water tank (14), after which the grey water is pumped back into the grey water tank (13),
c) in the event of an overload of the device, it switches to emergency mode by switching a rotary valve (21) to a position (2) so that a flush is performed from the fresh water flush tank (12) and everything, i.e. the urine and solids, is discharged directly into the sewer system, and then the device switches back to normal mode.

6. Device for separating solids, comprising a water closet (100) with a bowl which has an additional platform-shaped base (101) at the front, which extends from the front towards approximately the centre of the bowl (100) and ends there in a sloping drip nose (102), so that urine can be collected on this base (101) can be collected via the drip nose (102) in a collection chamber (103) connected below and via a small siphon (104) of the water closet (100) and a separate, small-dimensioned pipe (105) into a separate container of the device and collected there, and wherein solid excrement falls behind the drip nose (102) into the siphon water (106) of a large siphon (108) of the water closet (100) and then into a drain pipe (107) which leads out of the rear of the siphon (108) from the toilet bowl (100),
*whereby*
the facility includes, following the large siphon (108), at least the following technical components for treating the siphon outlet in a system that is closed within the facility and thus odour-tight:
• A solids separation tank (3) for collecting the solids,
• A solids pump (28) for conveying the separated solids upwards in a riser pipe (4) into a high-level solids tank (5) or a lift system with a lift basket (121) for conveying the solids upwards and simultaneously draining them and for tipping them out,
• A portioning device (6) with a valve (7) for dropping portions of solids (69) received from the solids pump (28) or the lift basket (121) into a tubular bag packaging unit (9) located below,
• A tubular bag packaging unit (9) for producing hermetically sealed and subsequently separated bags (63) containing solids and a proportion of air from a tube (51) fed continuously within the system, for discharge into the sewer system.

7. Device according to claim 6, wherein it includes the following components within the closed system: a lift system with a catch basket (121) with slots (122) or holes in its side walls and a bottom (123) that can be folded down against spring force, which catch basket (121) can be raised by motor and guided on profiles (128) arranged in the device (128) arranged in the device and can be swung out laterally in the uppermost position about a transverse axis (130), whereby its bottom (123) can then be folded out by motor, for tipping the solids contained therein through a discharge chute (131) on the device into the associated portioning device located below.

8. Device according to claim 6, wherein it has the following components above the water closet (100) and within the closed system: a fresh water tank (12) and a grey water tank (13) for the successive flushing of the water closet (100), first with grey water and then with fresh water, a brown water tank (14) below the water closet (100), which is fed by an overflow pipe (78) from the solid matter separation tank (3), and further a pump (32) for conveying the brown water into a UV disinfection unit (19) arranged in this closed system above the grey water tank (13), which can be fed by a fresh water supply line (99).

9. Device according to one of claims 6 to 7, wherein the solids separation tank (3) for collecting the solids contains an agitator (26) with a paddle wheel for chopping the solids into a thick slurry, and has a conical bottom (27) for sucking the solids slurry through the solids pump (28), and the riser pipe (4) for conveying the solids upwards has an electrically operated shut-off valve (30) to prevent backflow when the solids pump (28) is at a standstill.

10. Device according to one of claims 6 to 8, wherein the portioning device (6) has a rotor housing (36) with an inlet opening (37) at the top and an outlet opening at the bottom, with a rotatable swivel lever (38) therein, and a rotor (43) in the rotor housing (36) has a passage channel (39), and the portioning device (6) has an electric double drive (42) with two coaxial axes (47, 48) for rotating the rotor (43) and the pivot lever (38) in both directions of rotation.

11. Device according to one of claims 6 to 10, wherein the tubular bag packaging unit (9) includes the following components: a tube (51) that can be fed endlessly from a roll (50), two press rollers (52, 53) that roll off each other (52, 53) for rolling the endlessly feedable tube (51) from bottom to top, with two vacuum strips (54, 55) at the top that can be moved towards and away from each other, each with a sealing strip (56), whereby these vacuum bars (54, 55) can grip and pull up the upper end of the tube by suction, and then open it to form a rectangular opening (62) by moving the vacuum bars (54, 55) apart, and furthermore two lower welding bars (58, 59) for straight or curved transverse welding of the tube (51) below a bag length measured from the upper opening (62), and a cutting device (65) for cutting off the tube (51) below the straight or curved transverse weld (64).

12. Device according to one of claims 6 to 11, wherein it has two curved welding bar pairs (83, 84; 85, 86), namely a lower pair (83, 84) with the inside of the curve facing upwards, and an upper curved welding bar pair (85, 86) with the inner side of the arc facing downwards, for producing an initially lower arc-shaped weld on the bag material (51) and, after filling, for producing an upper arc-shaped weld on the bag material, thereby producing an approximately round bag (63) bulging at the front and rear, and wherein the upper and lower pairs of arcuate sealing bars (83, 84; 85, 86) are equipped with knives (73) extending radially outside the sealing bars for cutting off the film remnants outside the produced approximately round bag (63).

13. Device according to claim 11, wherein the tubular bag packaging unit (9) includes an air pipe (70) that can be lowered into the bag opening for blowing air into the bag (63) filled with solid portions, wherein the bag opening (62) can be closed around the air pipe (70) and sealed by its sealing bars (56) by bringing the vacuum strips (54, 55) the bag opening (62) around the air tube (70) can be sealed and welded by its welding bars (56), and after pulling the air pipe (70) upwards, the location there in the opening (62) can also be sealed, so that a hermetically sealed bag (63) containing air and solid portions (69) can be produced.

14. Device according to one of claims 6 to 13, wherein it includes a slide chute or slide channel (71) or slide plate as an inclined plane for the hermetically sealed bags (63), as well as a support plate (75) that can be moved in and out of the area below the bag (63) by a motor, so that after a support plate (75) is extended or retracted and the vacuum strips (54, 55) are released, the bag (63) can slide down the slide plate (71) into a drain pipe (31) with a spring-loaded odour trap (87) and, after passing through this, into the sewer system.

15. Device according to one of claims 6 to 14, wherein it has an electrically operable 120° rotary valve (21) after its water closet (100) and the latter's large siphon (108), which forms a diverter with three setting positions, with a first position for normal operation, for forwarding the incoming flushing material consisting of water, possibly urine if this is not collected separately, and solids such as excrement and toilet paper into the subsequent solids separation tank (3), with a second position for fault operation to directly discharge the flushed material into the sewer system in the conventional manner, and a third position for cleaning operation to backwash the downstream solid matter separation tank (3), whereby both this rotary valve (21) and the solid matter separation tank (3) can be flushed through by means of cleaning nozzles suitably arranged inside.

16. Device according to one of claims 6 to 15, wherein it includes an electronic control unit PLC (18) for processing electrical signals from all components and for controlling the same, and in that spray nozzles for cleaning areas susceptible to dirt and webcams are installed inside the device for monitoring the condition of the device and the processes inside it in real time.

17. Device according to claim 15, comprising an electronic control unit PLC (18) for processing electrical signals from the following components and for controlling them for electronic control:
a) the motor-driven 120° rotary valve (21),
b) the agitator (26) in the solids separation tank (3),
c) the solids pump (28) for conveying the solids upwards, or the lift system with the lift basket (121) that can be conveyed upwards and tipped out at the top,
d) the shut-off valve (30) in the riser pipe (4),
e) the portioning device (6),
f) the valve (7) below the portioning device (6),
g) the motor-driven horizontally and vertically movable vacuum strips (54, 55; 83, 84) for the opening (62) of the tubular bags (63), their vacuum power and their integrated sealing strips (56),
h) the motor-driven horizontally and laterally movable vacuum strips (58, 59; 83, 84) for cross-sealing or arc-shaped sealing of the bags (63) along their bottom to be created,
i) the support plate (75) which can be moved by motor under the respective hanging bag (63),
j) the sliding plate (71) or the sliding channel or the sliding trough or sliding plate as an inclined plane, which can be moved under a filled bag (63),
k) the brown water pump (32),
l) the UV disinfection unit (19),
m) all pipe valves,
n) all spray nozzles for sporadic internal cleaning of the device,
o) all monitoring elements such as cameras, sensors, etc.

18. Device according to one of claims 6 to 17, wherein its components are installed as a complete built-in module (1) in a steel frame (49) of the device and this steel frame (49) fits into the standard installation bay of a wall-mounted toilet, i.e. measuring a maximum of 750 mm in width, 280 mm in depth and 1500 mm to 2200 mm in height.

## Revendications

1. Procédé pour séparer les matières solides d'une cuvette de WC (100) après son siphon (108), les matières solides étant emballées avec une partie d'air dans des sachets individuels (63) d'un tuyau (51) alimenté en continu, et les sachets flottants (63) étant soudés hermétiquement et évacués individuellement dans les égouts (119).

2. Procédé selon la revendication 1, dans lequel on utilise un dispositif qui comprend un système de levage avec une nacelle (121) comportant des fentes (122) dans ses parois latérales et un fond (123) rabattable contre la force d'un ressort, et laquelle nacelle (121) peut être levé à l'aide d'un moteur et guidé sur des profilés (128) et peut pivoter latéralement autour d'un axe transversal (130) dans la position la plus haute, son fond (123) pouvant ensuite être rabattu pour déverser les matières solides contenues par une goulotte de déversement (131) dans le dispositif de portionnement situé en dessous,
dans lequel
a) les matières solides sont acheminées dans un réservoir de séparation des matières solides (3) d'où elles tombent par portions par le haut dans la benne élévatrice (121) du système élévateur,
b) les matières solides sont transportées vers le haut dans le panier élévateur (121) du système élévateur et s'égouttent simultanément à travers le panier élévateur (121),
c) les matières solides provenant du panier élévateur (121) parviennent dans un dispositif de portionnement (6) à partir duquel les matières solides sont libérées en portions (69) par une soupape (7) et sont déversées dans l'ouverture (62) maintenue ouverte vers le haut d'un sac tubulaire (63), le sac tubulaire (63) étant formé dans sa partie inférieure par une soudure transversale (64) à partir d'un tube (51) alimenté en continu par le bas à partir d'un rouleau (50) et étant maintenu dans la zone d'ouverture par des barres à vide (54, 55) dans la zone de l'ouverture et est découpé en dessous de la soudure transversale (64) du tuyau sans fin (51), puis une plaque de support (75) est déplacée sous le sac (63) et le sac (63) est déposé sur celle-ci (75),
d) le sac (63) est fermé après remplissage et insufflation d'air par soudage de l'ouverture (62),
e) le sac (63) est laissé tomber sur une goulotte ou une rainure de glissement (71) ou une plaque de glissement en déchargeant et en écartant les barres à vide (55, 54), après quoi il est évacué dans les égouts par un tuyau d'évacuation (31).

3. Procédé selon la revendication 2, dans lequel
a) les matières solides sont acheminées vers un réservoir de séparation des matières solides (3) dans lequel elles sont broyées en une bouillie épaisse et s'affaissent sur son fond (27),
b) la bouillie épaisse est transportée au moyen d'une pompe à matières solides (28) dans un réservoir à matières solides (5) situé en hauteur,
c) la bouillie épaisse est divisée en portions (69) à l'aide d'un dispositif de portionnement (6) et (7) dans l'ouverture (62) maintenue ouverte vers le haut d'un sac tubulaire (63), le sac tubulaire (63) étant formé dans sa partie inférieure par une soudure transversale (64) à partir d'un tube (51) alimenté en continu par le bas à partir d'un rouleau (50) et étant maintenu dans la zone d'ouverture par des barres à vide (54, 55) dans la zone de l'ouverture et est découpé en dessous de la soudure transversale (64) du tube sans fin (51), puis une plaque d'appui (75) est déplacée sous le sac (63) et le sac (63) est déposé sur celle-ci (75),
d) le sac (63) est fermé après remplissage et insufflation d'air par soudage de l'ouverture (62),
e) le sac (63) est déposé sur une goulotte ou une rainure de glissement (71) ou une plaque de glissement par déchargement et écartement des barres à vide (55, 54), après quoi il est évacué dans les égouts par un tuyau d'évacuation (31).

4. Procédé selon l'une des revendications 2 ou 3, dans lequel les excréments solides et l'urine, si elle n'est pas évacuée séparément au préalable, parviennent dans le réservoir de séparation des matières solides (3) après un déclenchement de la chasse d'eau du réservoir d'eaux grises (13) situé au-dessus de la cuvette des toilettes (100) via un siphon et une vanne rotative (21), les matières solides mélangées aux eaux grises sont pompées vers le haut dans le réservoir à matières solides (5) via un tuyau ascendant (4) ( ), les eaux grises excédentaires refluent dans le réservoir à eaux brunes (14) via un tuyau de trop-plein (78), le contenu du réservoir à eaux brunes est réduit à 2 litres, un rinçage supplémentaire à partir du réservoir d'eau fraîche (12) est effectué avec environ 2 litres, afin de rincer le siphon des toilettes, et cette eau relativement propre reflue dans le réservoir d'eaux brunes (14), et une fois ce deuxième processus de remplissage terminé, les eaux brunes sont transportées dans une installation de désinfection UV (19) située en haut, et le réservoir d'eaux brunes est rempli d'eau fraîche si nécessaire.

5. Procédé selon l'une des revendications 2 ou 4, dans lequel
a) dans le cas d'une évacuation d'urine pure par l'utilisateur, le rinçage est déclenché par le réservoir d'eau fraîche (12) en appuyant sur l'un des deux boutons et une vanne rotative (21) est placée en position de sorte que l'urine s'écoule de manière conventionnelle dans le tuyau d'évacuation (31) et donc dans les égouts,
b) en cas de mauvaise manipulation avec un bouton plus grand de ces deux boutons d'actionnement, après qu'aucune matière solide n'ait été évacuée, un rinçage de 4 litres d'eau grise est déclenché, sans rinçage à l'eau fraîche, et l'eau grise non utilisée est dirigée vers le réservoir d'eau brune (14), après quoi l'eau grise est repompée dans le réservoir d'eau grise (13),
c) en cas de surcharge de l'installation, celle-ci passe en mode de fonctionnement d'urgence en commutant une vanne rotative (21) sur une position (2), de sorte qu'un rinçage à partir du réservoir de rinçage à eau fraîche (12) a lieu et que tout, c'est-à-dire l'urine et les matières solides, est directement acheminé vers les égouts, puis l'installation repasse en mode de fonctionnement normal.

6. Dispositif pour la séparation des matières solides, comprenant des toilettes à eau (100) avec une cuvette qui présente à l'avant un fond supplémentaire en forme de plate-forme (101) qui s'étend de l'avant vers le milieu de la cuvette (100) et se termine à cet endroit par un rebord incliné (102) de sorte que l'urine peut être recueillie sur ce fond (101) puisse être recueillie par le bec verseur (102) dans une chambre de collecte (103) située en dessous et, via un petit siphon (104) des toilettes à eau (100) de l' et un tuyau séparé de petite taille (105), être évacuée dans un récipient séparé du dispositif et y être collectée, et les excréments solides tombant derrière le bec verseur (102) dans l'eau du siphon (106) d'un grand siphon (108) des toilettes à eau (100), puis dans un tuyau d'évacuation (107) qui sort à l'arrière du siphon (108) de la cuvette des toilettes (100),
où
le dispositif comprend, à la suite du grand siphon (108), au moins les composants techniques suivants pour traiter la sortie du siphon dans un système fermé à l'intérieur du dispositif et donc étanche aux odeurs :
• un réservoir de séparation des matières solides (3) pour la collecte des matières solides,
• Une pompe à matières solides (28) pour transporter les matières solides séparées vers le haut dans un tuyau ascendant (4) vers un réservoir à matières solides (5) situé en hauteur ou un système de levage avec un panier de levage (121) pour transporter les matières solides vers le haut et les égoutter simultanément, puis les déverser,
• Un dispositif de portionnement (6) avec une vanne (7) pour laisser tomber les portions de matières solides (69) reçues de la pompe à matières solides (28) ou de la nacelle élévatrice (121) dans une unité d'emballage à sachets tubulaires (9) disposée en dessous,
• Une unité d'emballage à sachets tubulaires (9) pour la production de sachets (63) hermétiquement soudés puis séparés, contenant des matières solides et une partie d'air provenant d'un tube (51) alimenté en continu à l'intérieur du système, pour évacuation dans les égouts.

7. Dispositif selon la revendication 6, comprenant les composants suivants à l'intérieur du système fermé : un système de levage avec un panier de réception (121) muni de fentes (122) ou de trous dans ses parois latérales et d'un fond (123) rabattable contre la force d'un ressort, lequel panier de réception (121) peut être levé de manière motorisée et guidé sur des profilés (128) disposés dans le dispositif (128) et peut pivoter latéralement autour d'un axe transversal (130) dans la position la plus haute, son fond (123) pouvant ensuite être rabattu par un moteur, pour déverser les matières solides contenues par une goulotte de déversement (131) sur le dispositif dans le dispositif de portionnement correspondant situé en dessous.

8. Dispositif selon la revendication 6, dans lequel il comprend les composants suivants au-dessus des toilettes à eau (100) et à l'intérieur du système fermé : un réservoir d'eau fraîche (12) et un réservoir d'eaux grises (13) pour le rinçage successif des toilettes à eau (100), d'abord avec de l'eau grise, puis avec de l'eau fraîche, un réservoir d'eaux brunes (14) situé sous les toilettes à eau (100), qui est alimenté par un tuyau de trop-plein (78) du réservoir de séparation des matières solides (3), et en outre une pompe (32) pour acheminer les eaux brunes vers une unité de désinfection par UV (19) disposée dans ce système fermé au-dessus du réservoir d'eaux grises (13), qui peut être alimenté par une conduite d'eau fraîche (99).

9. Dispositif selon l'une des revendications 6 à 7, dans lequel le réservoir de séparation des matières solides (3) destiné à collecter les matières solides comprend un agitateur (26) avec une roue à aubes pour broyer les matières solides en une bouillie épaisse, ainsi qu'un fond conique (27) pour aspirer la bouillie de matières solides à travers la pompe à matières solides (28), et le tuyau ascendant (4) destiné à transporter les matières solides vers le haut comporte une vanne d'arrêt (30) à commande électrique pour empêcher un reflux lorsque la pompe à matières solides (28) est à l'arrêt.

10. Dispositif selon l'une des revendications 6 à 8, dans lequel le dispositif de portionnement (6) comprend un boîtier de rotor (36) avec une ouverture d'entrée (37) en haut et une ouverture de sortie en bas, avec à l'intérieur un levier pivotant rotatif (38), et un rotor (43) dans le boîtier de rotor (36) comportant un canal de passage (39), et le dispositif de portionnement (6) comportant un double entraînement électrique (42) avec deux axes coaxiaux (47, 48) pour faire tourner le rotor (43) et le levier pivotant (38) dans les deux sens de rotation.

11. Dispositif selon l'une des revendications 6 à 10, l'unité d'emballage à sachets tubulaires (9) comprenant les composants suivants : un tube (51) pouvant être alimenté en continu à partir d'un rouleau (50), deux rouleaux de pression (52, 53) déroulant l'un sur l'autre (52, 53) pour faire rouler de bas en haut le tube (51) pouvant être alimenté en continu, avec en haut deux barres à vide (54, 55) pouvant être rapprochées et éloignées l'une de l'autre, chacune avec une barre de soudage (56), ces barres à vide (54, 55) permettant de saisir et de soulever l'extrémité supérieure du tube par aspiration, puis de l'ouvrir en écartant les barres à vide (54, 55) pour former une ouverture rectangulaire (62), ainsi que deux barres de soudage situées plus bas (58, 59) pour le soudage transversal droit ou courbé du tuyau (51) en dessous d'une longueur de sac mesurée à partir de l'ouverture supérieure (62), ainsi qu'un dispositif de coupe (65) pour couper le tuyau (51) en dessous du soudage transversal droit ou courbé réalisé (64).

12. Dispositif selon l'une des revendications 6 à 11, dans lequel il comporte deux paires de barres de soudage courbes (83, 84 ; 85, 86), à savoir une paire inférieure (83, 84) avec le côté intérieur de la courbe dirigé vers le haut, et une paire supérieure de barres de soudage courbes (85, 86) dont la face intérieure est dirigée vers le bas, pour réaliser d'abord une soudure inférieure en forme d'arc du matériau du sac (51) et, après remplissage, une soudure supérieure en forme d'arc du matériau du sac, et ainsi réaliser un sac (63) approximativement rond, bombé vers l'avant et vers l'arrière, et les paires de barres de soudage supérieures et inférieures en forme d'arc (83, 84 ; 85, 86) étant équipées de couteaux (73) s'étendant radialement à l'extérieur des barres de soudage, pour séparer les restes de film à l'extérieur du sac approximativement rond (63) créé.

13. Dispositif selon la revendication 11, dans lequel l'unité d'emballage à sachets tubulaires (9) comprend un tube à air (70) pouvant être abaissé dans l'ouverture du sachet pour insuffler de l'air dans le sachet (63) rempli de portions de matière solide, l'ouverture du sachet (62) pouvant être fermée autour du tube à air (70) et soudée par les barres de soudure (56) lorsque les barres à vide (54, 55) permet de fermer l'ouverture du sac (62) autour du tuyau à air (70) et de la souder à l'aide de ses barres de soudage (56), et, après avoir retiré le tube à air (70) vers le haut, l'emplacement correspondant dans l'ouverture (62) peut également être soudé, de sorte qu'un sac (63) hermétiquement fermé contenant de l'air et des particules solides (69) peut être créé.

14. Dispositif selon l'une des revendications 6 à 13, comprenant une goulotte ou une glissière (71) ou une plaque de glissement servant de plan incliné pour les sachets (63) soudés hermétiquement, ainsi qu'une plaque d'appui (75) pouvant être introduite et retirée par un moteur dans la zone située sous le sachet (63), de sorte qu'après le retrait ou l'éloignement d'une plaque d'appui (75) et la décharge des barres à vide (54, 55), le sac (63) peut glisser sur la plaque de glissement (71) dans un tuyau d'évacuation (31) muni d'un clapet anti-odeurs à ressort (87) et, après avoir passé celui-ci, être libéré dans les égouts.

15. Dispositif selon l'une des revendications 6 à 14, dans lequel il présente, après ses toilettes à eau (100) et après leur grand siphon (108), une vanne rotative à 120° à commande électrique (21) actionnable électriquement, qui forme un aiguillage à trois positions de réglage, avec une première position pour un fonctionnement normal, pour acheminer les matières à évacuer arrivantes, à savoir l'eau, éventuellement l'urine si celle-ci n'est pas collectée séparément, et les matières solides telles que les excréments et le papier toilette, dans le réservoir de séparation des matières solides (3) situé en aval, une deuxième position pour un fonctionnement en cas de panne, pour évacuer directement les matières à rincer de manière conventionnelle dans les égouts, et une troisième position pour un fonctionnement en mode nettoyage, pour le rinçage à contre-courant du réservoir de séparation des matières solides (3) raccordé, cette vanne rotative (21) et le réservoir de séparation des matières solides (3) pouvant être rincés par des buses de nettoyage disposées de manière appropriée à l'intérieur.

16. Dispositif selon l'une des revendications 6 à 15, comprenant une unité de commande électronique SPS (18) pour le traitement des signaux électriques provenant de tous les composants et pour la commande de ceux-ci, et en ce que des buses de pulvérisation sont installées à l'intérieur du dispositif pour nettoyer les zones susceptibles d'être encrassées, ainsi que des webcams pour enregistrer en temps réel l'état du dispositif et les processus qui s'y déroulent.

17. Dispositif selon la revendication 15, comprenant une unité de commande électronique SPS (18) pour traiter les signaux électriques provenant des composants suivants et pour les commander à des fins de commande électronique :
a) la vanne rotative à 120° (21) à entraînement motorisé,
b) l'agitateur (26) dans le réservoir de séparation des matières solides (3),
c) la pompe à matières solides (28) pour le transport vers le haut des matières solides ou le système de levage avec le panier de levage (121) pouvant être transporté vers le haut et basculé vers le haut,
d) la vanne d'arrêt (30) dans la conduite montante (4),
e) le dispositif de portionnement (6),
f) la vanne (7) située sous le dispositif de portionnement (6),
g) les barres à vide (54, 55 ; 83, 84) déplaçables horizontalement et verticalement par moteur pour l'ouverture (62) des sachets tubulaires (63), leur puissance de vide et leurs barres de soudage intégrées (56),
h) les barres à vide (58, 59 ; 83, 84) déplaçables horizontalement et latéralement par moteur pour le soudage transversal ou en arc des sachets (63) le long de leur fond à réaliser,
i) la plaque d'appui (75) pouvant être rentrée à l'aide d'un moteur sous le sac (63) suspendu,
j) la plaque coulissante (71) ou la goulotte coulissante ou la rainure coulissante ou la plaque coulissante en tant que plan incliné, pouvant être introduite sous un sac rempli (63),
k) la pompe à eaux brunes (32),
l) l'unité de désinfection UV (19),
m) toutes les vannes de conduite,
n) toutes les buses de pulvérisation pour le nettoyage interne sporadique de l'installation,
o) tous les éléments de surveillance tels que caméras, capteurs, etc.

18. Installation selon l'une des revendications 6 à 17, ses composants étant montés sous forme de module complet (1) dans un cadre en acier (49) de l'installation, ce cadre en acier (49) s'adaptant dans la niche de montage standard d'un WC mural, c'est-à-dire mesurant au maximum 750 mm de largeur, 280 mm de profondeur et 1500 mm à 2200 mm de hauteur.
